(19) **Europäisches Patentamt**

**European Patent Office**

**Office européen des brevets**

(11) **EP 1 084 741 A1**

(12) **EUROPEAN PATENT APPLICATION**
published in accordance with Art. 158(3) EPC

(43) Date of publication:
**21.03.2001 Bulletin 2001/12**

(51) Int. Cl.7: **B01D 3/32**

(21) Application number: **99917217.4**

(86) International application number:
**PCT/JP99/02286**

(22) Date of filing: **28.04.1999**

(87) International publication number:
**WO 99/56848 (11.11.1999 Gazette 1999/45)**

(84) Designated Contracting States:
**CH DE ES FR GB IT LI LU NL**

(30) Priority: **06.05.1998 JP 12311698**
**06.05.1998 JP 12311798**
**06.05.1998 JP 12311898**
**06.05.1998 JP 12311998**
**06.05.1998 JP 12312098**
**06.05.1998 JP 12312198**
**07.01.1999 JP 216099**

(71) Applicant:
**SUMITOMO HEAVY INDUSTRIES, LTD.**
**Shinagawa-ku, Tokyo 141-0001 (JP)**

(72) Inventors:
• **TAMURA, Katsunori,**
**Sumitomo Heavy Ind., Ltd.**
**Shinagawa-ku, Tokyo 141-0001 (JP)**
• **NISHIYAMA, Ken,**
**Sumitomo Heavy Ind., Ltd.**
**Shinagawa-ku, Tokyo 141-0001 (JP)**

• **INOUE, Taizo,**
**Sumitomo Heavy Ind. Ltd. Tanashi Wo**
**Tanashi-shi, Tokyo 188-0001 (JP)**
• **YOSHIMOTO, Keiji,**
**Sumitomo Heavy Ind. Ltd.**
**Chuo-ku, Osaka-shi, Osaka 541-0041 (JP)**
• **OKAMOTO, Noboru,**
**Sumiju Tokyo Eng. Co., Ltd.**
**Tanashi-shi, Tokyo 188-0001 (JP)**
• **NAGASHIMA, Minoru,**
**Sumiju Tokyo Eng. Co., Ltd.**
**Tanashi-shi, Tokyo 188-0001 (JP)**

(74) Representative:
**Geyer, Ulrich F., Dr. Dipl.-Phys.**
**WAGNER & GEYER,**
**Patentanwälte,**
**Gewürzmühlstrasse 5**
**80538 München (DE)**

(54) **DEVICE AND METHOD FOR DISTILLATION**

(57)     An object of the present invention is to reduce the number of instruments used in a distillation apparatus to thereby simplify control. A distillation apparatus includes a column body; partitions (22-24) for dividing the interior of the column body into first chambers (14A-16A) and second chambers (14B-16B), which are adjacent to each other; a feed nozzle (41) for feeding into the column body a material liquid (M); a first distillation section (25) including an enriching section (AR1) located at an upper portion thereof and an exhaust section (AR2) located at a lower portion thereof; a second distillation section (26) including an enriching section (AR3) located at an upper portion thereof and an exhaust section (AR4) located at a lower portion thereof; a third distillation section (27) including an enriching section (AR5) located at an upper portion thereof and an exhaust section (AR6) located at a lower portion thereof; first discharge means for discharging a first component; second discharge means for discharging a second component; and third discharge means for discharging a third component. The partitions (22-24) are biased such that the cross-sectional area of the first chambers (14A-16A) differs from that of the second chambers (14B-16B). A pressure loss arising in the first chambers (14A-16A) and sum of pressure losses arising in the second chambers (14B-16B) can be equalized, thereby eliminating influence of descending liquid on ascending vapor.

FIG. 17

## Description

TECHNICAL FIELD

The present invention relates to a distillation apparatus and a distillation method.

BACKGROUND ART

Conventionally, a distillation apparatus composed of a plurality of distillation columns for obtaining products through distillation-effected separation of a plurality of components contained in a material liquid occupies a large area when the distillation columns are constructed separately from one another. In a side-column-type distillation apparatus, in order to adjust pressure within each distillation column, distribution of vapor among the distillation columns must be controlled, with the result that the distillation columns cannot be operated stably.

In order to cope with the above problems, there has been provided a distillation apparatus equipped with a Petlyuk-type distillation column. In this distillation apparatus, an inner cylinder is disposed within an outer cylinder, and a material liquid is fed into the inner cylinder so as to undergo distillation.

However, manufacture of this distillation apparatus encounters difficulty in supporting the inner cylinder with respect to the outer cylinder, in disposing a line in such a manner as to extend through the outer cylinder, and in attaching a feed nozzle to the inner cylinder. As a result, the cost of manufacture of the distillation apparatus becomes high. Since sufficient sealing cannot be established between the line and the outer cylinder and between the feed nozzle and the inner cylinder, distillation efficiency drops. Since the inner and outer cylinders are disposed concentrically, an exhaust section and an enriching section each assume an annular structure. Thus, manufacture of trays to be disposed in the exhaust section and the enriching section is difficult.

In order to cope with the above problem, there has been provided a distillation apparatus whose interior is divided by means of a flat partition (refer to US Patent No. 4,230,533).

The distillation apparatus is fed with a material liquid through an inlet pipe and includes a first distillation section, which in turn includes an enriching section formed above the inlet pipe and an exhaust section formed below the inlet pipe; a second distillation section, which in turn includes an enriching section connected to and formed above the upper end of the first distillation section and an exhaust section formed below the upper end and located adjacent to the enriching section of the first distillation section while being separated by the partition; and a third distillation section, which in turn includes an enriching section connected to and formed above the lower end of the first distillation section and located adjacent to the exhaust section of the first distillation section while being separated by the partition, and an exhaust section formed below the lower end.

In this case, the cost of the distillation apparatus can be lowered, distillation efficiency can be increased, and trays can be manufactured easily.

However, in the above-mentioned conventional distillation apparatus, in order to appropriately distribute liquid descending from its upper portion between the enriching section of the first distillation section and the exhaust section of the second distillation section, not only must the flow rate of liquid fed from the enriching section of the second distillation section to the enriching section of the first distillation section be regulated by means of an analyzer, a flow controller, and a flow control valve, but also the flow rate of liquid fed from the enriching section of the second distillation section to the exhaust section of the second distillation section must be regulated by means of a level sensor, a flow controller, and a flow control valve.

Also, in order to appropriately distribute between the exhaust section of the first distillation section and the enriching section of the third distillation section, the liquid descending from above, not only must the flow rate of a material liquid fed to the first distillation section be regulated by means of a flow controller and a flow control valve, but also the amount of a product discharged from a position located between the first and second distillation sections must be regulated by means of a level sensor, a flow controller, and a flow control valve.

Further, in order to appropriately distribute between the exhaust section of the first distillation section and the enriching section of the third distillation section, vapor ascending from below, not only must the flow rate of vapor fed from the exhaust section of the third distillation section to the exhaust section of the first distillation section be regulated by means of an analyzer and a flow control valve, but also the flow rate of vapor fed from the exhaust section of the third distillation section to the enriching section of the third distillation section must be regulated by means of an analyzer and a flow control valve.

As mentioned above, in order to appropriately distribute liquid and vapor, not only must instrumentation, such as analyzers, flow controllers, flow control valves, and level sensors, be disposed, but also complicated control must be performed through operation of the instruments, causing an increase in the size and cost of the distillation apparatus.

An object of the present invention is to provide a distillation apparatus and a distillation method capable of reducing the number of instruments, simplifying control, reducing apparatus size, and reducing cost, through solution of the above problems involved in the conventional distillation apparatus.

DISCLOSURE OF THE INVENTION

To achieve the above object, a distillation apparatus of the present invention comprises a column body; a partition for dividing the interior of the column body into a first chamber and a second chamber, which are adjacent to each other; a feed nozzle for feeding into the column body a material liquid containing at least first to third components; a first distillation section comprising an enriching section located at an upper portion thereof and an exhaust section located at a lower portion thereof; a second distillation section disposed such that at least a portion thereof is adjacent to the top of the column body, and comprising an enriching section located at an upper portion thereof and an exhaust section located at a lower portion thereof; a third distillation section disposed such that at least a portion thereof is adjacent to the bottom of the column body, and comprising an enriching section located at an upper portion thereof and an exhaust section located at a lower portion thereof; first discharge means for discharging the first component; second discharge means for discharging the second component; and third discharge means for discharging the third component.

The partition is biased such that the cross-sectional area of the first chamber differs from that of the second chamber.

In this case, through employment of the first and second chambers of different cross-sectional areas, a pressure loss arising in the first chamber and that arising in the second chamber can be equalized, thereby eliminating influence of descending liquid on ascending vapor. Thus, vapor ascends while being distributed uniformly.

Distribution of vapor does not require disposition of many instruments, such as an analyzer, a flow controller, a flow control valve, and a level sensor, nor does it require execution of complicated control through operation of the instruments. Accordingly, the size of the distillation apparatus can be reduced, and the cost of the distillation apparatus can be reduced as well.

Since the descending of liquid and the ascending of vapor within the column body can be smoothened, occurrence of a channeling (lack of liquid) phenomenon in a packing can be prevented. Also, occurrence of maldistribution (nonuniform dispersion of liquid) can be prevented.

In another distillation apparatus of the present invention, the first distillation section is disposed at the center of the column body.

In a further distillation apparatus of the present invention, the feed nozzle is adapted to feed the material liquid into the first distillation section.

In still another distillation apparatus of the present invention, a packing is disposed in at least the enriching section and the exhaust section of the first distillation section such that the packing disposed in the enriching section and the packing disposed in the exhaust section are independent of each other.

In a still further distillation apparatus of the present invention, the second distillation section comprises the enriching section connected to and formed above an upper end of the first distillation section; and the exhaust section formed below the upper end and located adjacent to the enriching section of the first distillation section while being separated by the partition.

The third distillation section comprises the enriching section connected to and formed above a lower end of the first distillation section, and located adjacent to the exhaust section of the first distillation section while being separated by the partition; and the exhaust section formed below the lower end.

In a still further distillation apparatus of the present invention, the feed nozzle is disposed between the enriching section and the exhaust section in the first distillation section.

In a still further distillation apparatus of the present invention, the packings are of the same kind.

In a still further distillation apparatus of the present invention, the packings are of different kinds.

A still further distillation apparatus of the present invention comprises a column body; a partition for dividing the interior of the column body into a first chamber and a second chamber, which are adjacent to each other; a feed nozzle for feeding into the column body a material liquid containing at least first to third components; a first distillation section comprising an enriching section located at an upper portion thereof and an exhaust section located at a lower portion thereof; a second distillation section disposed such that at least a portion thereof is adjacent to the top of the column body, and comprising an enriching section located at an upper portion thereof and an exhaust section located at a lower portion thereof; a third distillation section disposed such that at least a portion thereof is adjacent to the bottom of the column body, and comprising an enriching section located at an upper portion thereof and an exhaust section located at a lower portion thereof; first discharge means for discharging the first component; second discharge means for discharging the second component; and third discharge means for discharging the third component.

Liquid descending from the enriching section of the second distillation section is distributed between the enriching section of the first distillation section and the exhaust section of the second distillation section at a distribution ratio which is predetermined on the basis of distillation conditions. A pressure loss arising in the first distillation section is equalized with sum of a pressure loss arising in the exhaust section of the second distillation section and a pressure loss arising in the enriching section of the third distillation section.

In this case, since a pressure loss arising in the first distillation section is equalized with sum of a pressure loss arising in the exhaust section of the second distillation section and a pressure loss arising in the enriching section of the third distillation section, descending liquid does not affect ascending vapor. Thus, vapor ascends while being distributed uniformly.

Distribution of vapor does not require disposition of many instruments, such as an analyzer, a flow controller, a flow control valve, and a level sensor, nor does it require execution of complicated control through operation of the instruments. Accordingly, the size of the distillation apparatus can be reduced, and the cost of the distillation apparatus can be reduced as well.

Since the descending of liquid and the ascending of vapor within the column body can be smoothened, occurrence of a channeling phenomenon in the packings can be prevented. Also, occurrence of maldistribution can be prevented.

In a still further distillation apparatus of the present invention, an F factor in at least the first distillation section, the exhaust section of the second distillation section, and the enriching section of the third distillation section is set to a value that enables obtainment of a pressure loss almost free from influence of the amount of descending liquid.

In a still further distillation apparatus of the present invention, an F factor in at least the first distillation section, the exhaust section of the second distillation section, and the enriching section of the third distillation section is 1.0-1.5.

In this case, since the F factor is 1.0-1.5, a pressure loss remains almost unchanged even when the amount of descending liquid varies. Accordingly, a pressure loss arising in the first distillation section is equalized with sum of a pressure loss arising in the exhaust section of the second distillation section and a pressure loss arising in the enriching section of the third distillation section.

In a still further distillation apparatus of the present invention, the pressure losses are calculated on the basis of the number of theoretical stages, the number of theoretical stages per meter, and a pressure loss per unit height.

In a still further distillation apparatus of the present invention, the ratio between the cross-sectional area of the first distillation section and the cross-sectional area of the exhaust section of the second distillation section, and the ratio between the cross-sectional area of the first distillation section and the cross-sectional area of the enriching section of the third distillation section are established according to the amount of ascending vapor.

A still further distillation apparatus of the present invention comprises a column body; a partition for dividing the interior of the column body into a plurality of chambers, which are adjacent to one another; a collector disposed within the column body and adapted to collect liquid descending from above; and a channel-type distributor for distributing liquid collected by the collector, among the chambers in different portions.

In this case, liquid descending from above is collected by the collector and then distributed among the chambers in different portions.

Accordingly, distillation can be performed in the optimum state according to distillation conditions, thereby decreasing energy consumption in the distillation apparatus. Furthermore, since there is no need for employing a complicated instrumentation control system, the size of the distillation apparatus can be reduced, and the cost of the distillation apparatus can be reduced as well.

A still further distillation apparatus of the present invention comprises a column body; a partition for dividing the interior of the column body into a plurality of chambers, which are adjacent to one another; a collector disposed within the column body and adapted to collect liquid descending from above; and an open static-pressure-type tubular distributor for distributing liquid collected by the collector, among the chambers in different portions.

In this case, liquid descending from above is collected by the collector and then distributed among the chambers in different portions.

Accordingly, distillation can be performed in the optimum state according to distillation conditions, thereby decreasing energy consumption in the distillation apparatus. Furthermore, since there is no need for employing a complicated instrumentation control system, the size of the distillation apparatus can be reduced, and the cost of the distillation apparatus can be reduced as well.

A still further distillation apparatus of the present invention comprises a column body; a partition for dividing the interior of the column body into a plurality of chambers, which are adjacent to one another; a collector disposed within the column body and adapted to collect liquid descending from a single chamber located thereabove; and an open static-pressure-type tubular distributor for distributing liquid collected by the collector to a single chamber located therebelow.

The distributor comprises an open static-pressure-type stand pipe for accumulating liquid discharged from the collector so as to establish a predetermined head; a first distribution section for distributing liquid in a direction perpendicular to the partition; and a second distribution section disposed in connection with the first distribution section and adapted to distribute liquid having been distributed by the first distribution section, in the same direction as that of the partition.

The first distribution section is connected to a lower end of the stand pipe at a position biased toward the partition from the center of the chamber.

In this case, liquid descending from one of the upper chambers is collected by the collector and then distributed to one of the lower chambers by the distributor. Since the first distribution section is connected to a lower end of the stand pipe at a position biased toward the partition from the center of the chamber, a pressure loss associated with flow resistance within the first distribution section can be made the same among the second distribution sections.

Accordingly, the liquid can be distributed uniformly over the entire chamber.

A still further distillation apparatus of the present invention comprises a column body; a partition for dividing the interior of the column body into a plurality of chambers, which are adjacent to one another; a collector box for forming a liquid collection gutter along the inner wall of each of the column body and the partition; and a plurality of collector laminas disposed on the collector box at predetermined pitches in parallel with one another.

Each of the collector laminas comprises an inclined portion and a gutter portion, and one end of the gutter portion faces the column body side of the liquid collection gutter while the other end of the gutter portion faces the partition side of the liquid collection gutter.

In this case, liquid descending from the upper chambers impinges against the collector laminas, flows along the inclined portions, and is received by the gutter portions. The thus-received liquid is transferred horizontally to the liquid collection gutter.

Accordingly, since a material liquid can be mixed with the liquid within the liquid collection gutter, a biased flow of the liquid does not occur. Thus, liquid and vapor can make sufficient contact with each other in the upper and lower chambers.

Since there is no need for projecting the collector box to a great extent into the interior of the column body in order to withdraw a product, a biased flow of vapor does not occur. Thus, liquid and vapor can make sufficient contact with each other in the upper and lower chambers.

Vapor ascending from the lower chambers flows through gaps between collector laminas and ascends along the inclined portions while being directed away from the column center. Since vapor ascends smoothly along the inclined portions, a pressure loss becomes negligibly small. Thus, since a biased flow of vapor does not occur, liquid and vapor can make sufficient contact with each other in the upper and lower chambers.

A still further distillation apparatus of the present invention comprises a column body; a partition for dividing the interior of the column body into a plurality of chambers, which are adjacent to one another; a collector box for forming a liquid collection gutter along the inner wall of each of the column body and the partition; and a plurality of collector laminas disposed on the collector box at predetermined pitches in parallel with one another.

The collector box and the collector laminas are assembled in advance, and the collector box is engaged with the column body and the partition.

In this case, since a material liquid is mixed with liquid within the liquid collection gutter, a biased flow of the liquid does not occur. Thus, liquid and vapor can make sufficient contact with each other in the upper and lower chambers.

Since there is no need for projecting the collector box to a great extent into the interior of the column body in order to withdraw a product, a biased flow of vapor does not occur. Thus, liquid and vapor can make sufficient contact with each other in the upper and lower chambers.

Since vapor ascending from the lower chambers flows through gaps between collector laminas and ascends smoothly along the inclined portions, a pressure loss becomes negligibly small. Thus, since a biased flow of vapor does not occur, liquid and vapor can make sufficient contact with each other in the upper and lower chambers.

Furthermore, since the collector box and the collector laminas are assembled in advance, the collector can be easily attached to the column body. Since there is no need for assembling the collector within the distillation column, assembling work can be simplified.

In a still further distillation apparatus of the present invention, an upper end of the collector box is engaged with the column body and the partition; and a flange of the column body and the partition are sealed against each other by means of a gasket assuming a form corresponding to the column body and the partition.

A distillation method of the present invention comprises the steps of: feeding a material liquid containing at least first to third components into a column body which comprises a first distillation section comprising an enriching section located at an upper portion thereof and an exhaust section located at a lower portion thereof; a second distillation section disposed such that at least a portion thereof is adjacent to the top of the column body, and comprising an enriching section located at an upper portion thereof and an exhaust section located at a lower portion thereof; a third distillation section disposed such that at least a portion thereof is adjacent to the bottom of the column body, and comprising an enriching section located at an upper portion thereof and an exhaust section located at a lower portion thereof; and a partition which is disposed in a biased manner so as to render the cross-sectional area of a first chamber different from that of a second chamber; condensing vapor containing a predetermined component, by means of a condenser connected to an upper end of the second distillation section; evaporating liquid containing a predetermined component, by means of an evaporator connected to a lower end of the third distillation section; and obtaining liquid rich in the first component at the upper end of the second distillation section, liquid rich in the third component at the lower end of the third distillation section, and liquid rich in the second component at a section where the partition is disposed.

In another distillation method of the present invention, the first component is lower in boiling point than the second component, which in turn is lower in boiling point than the third component.

BRIEF DESCRIPTION OF DRAWINGS

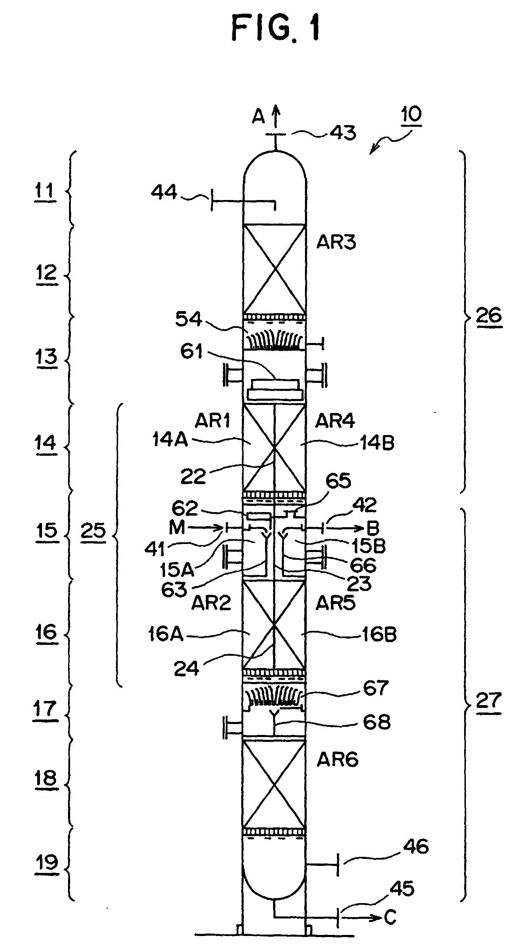

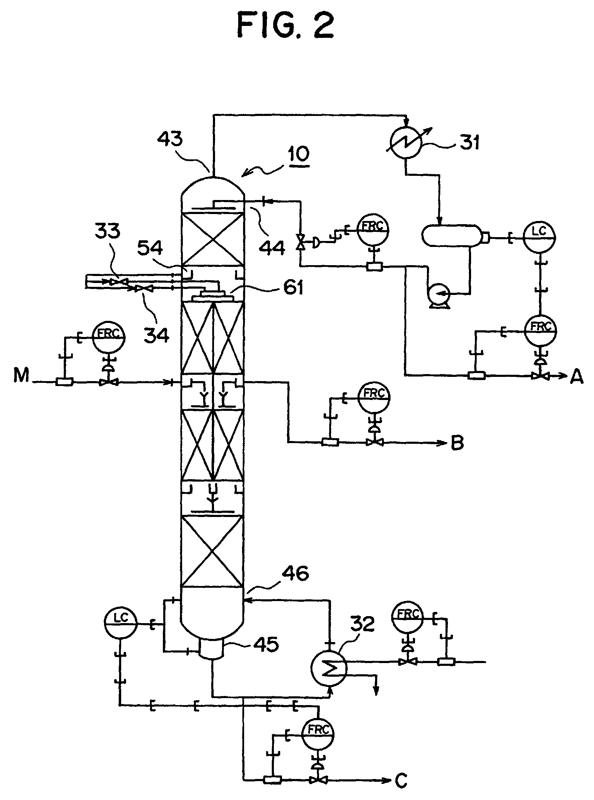

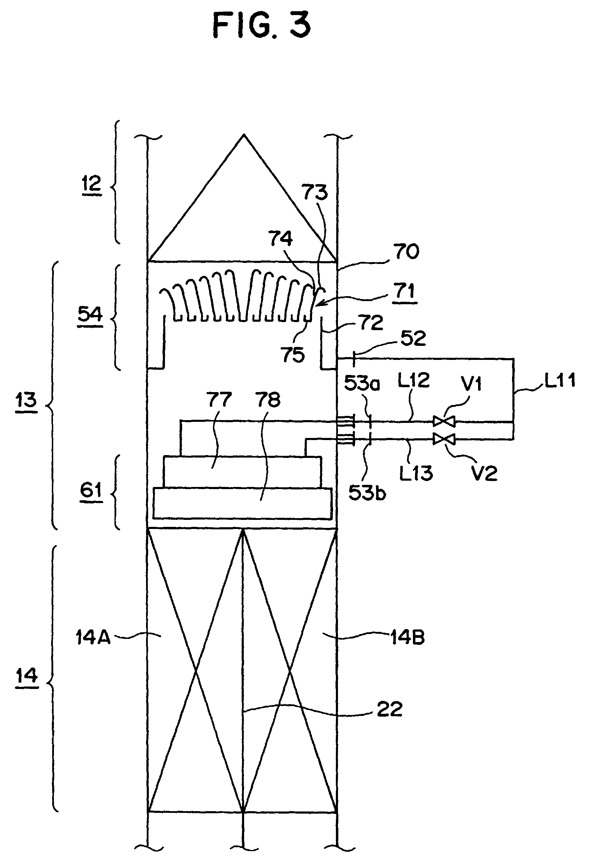

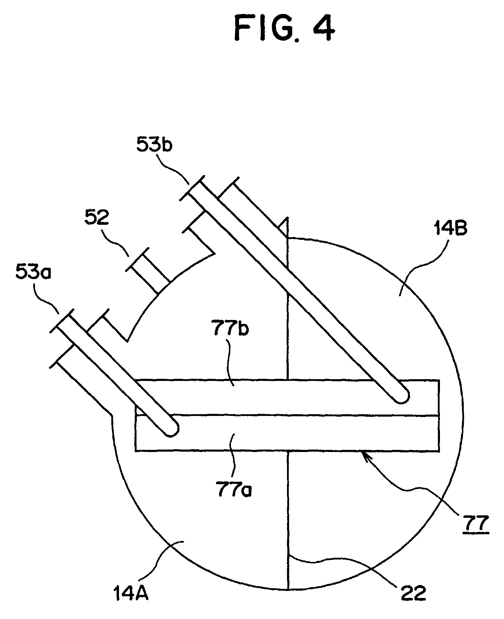

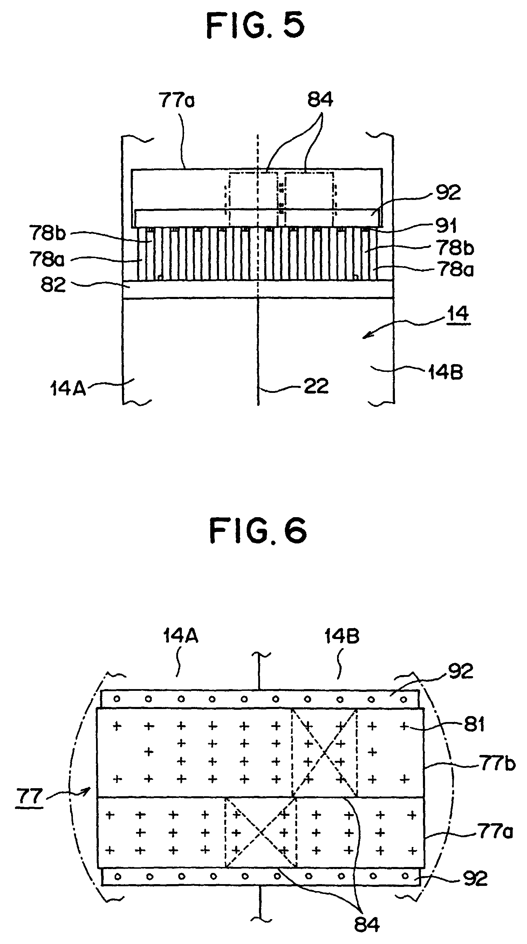

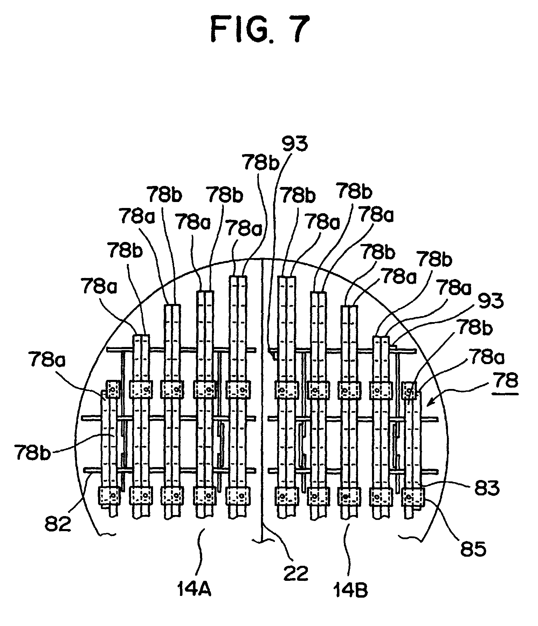

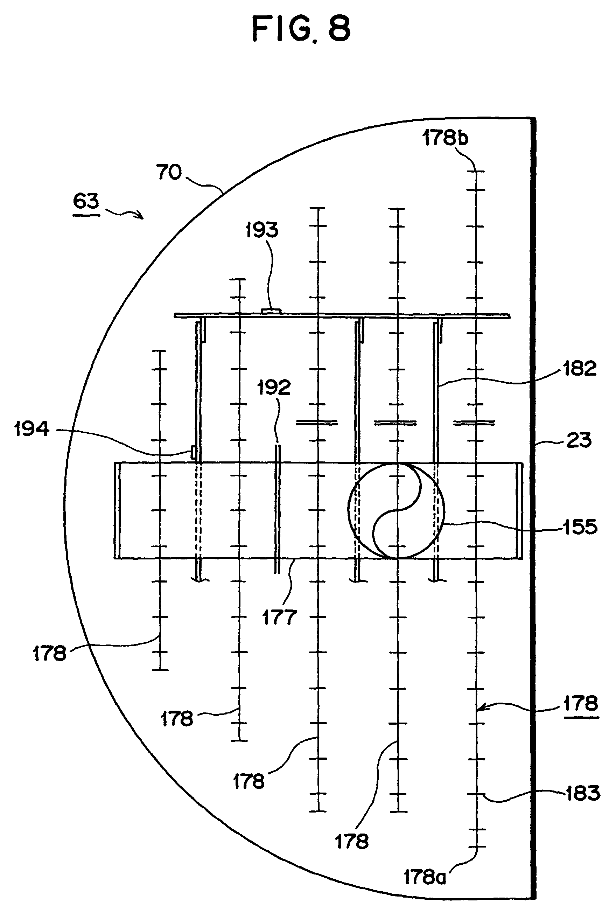

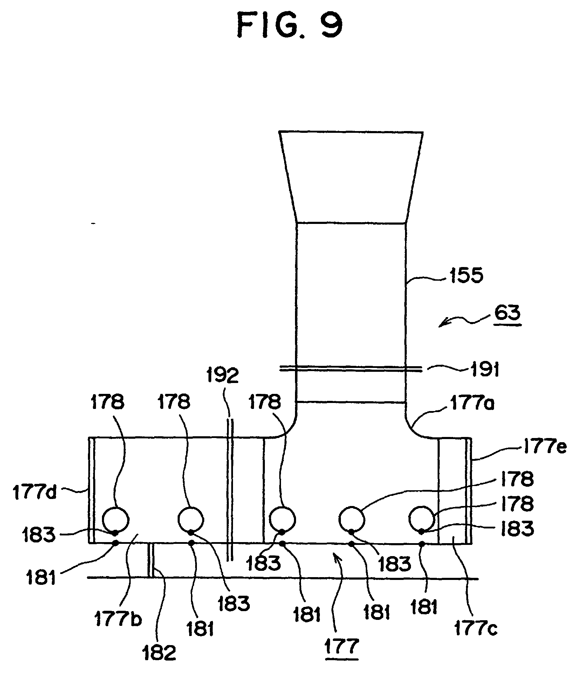

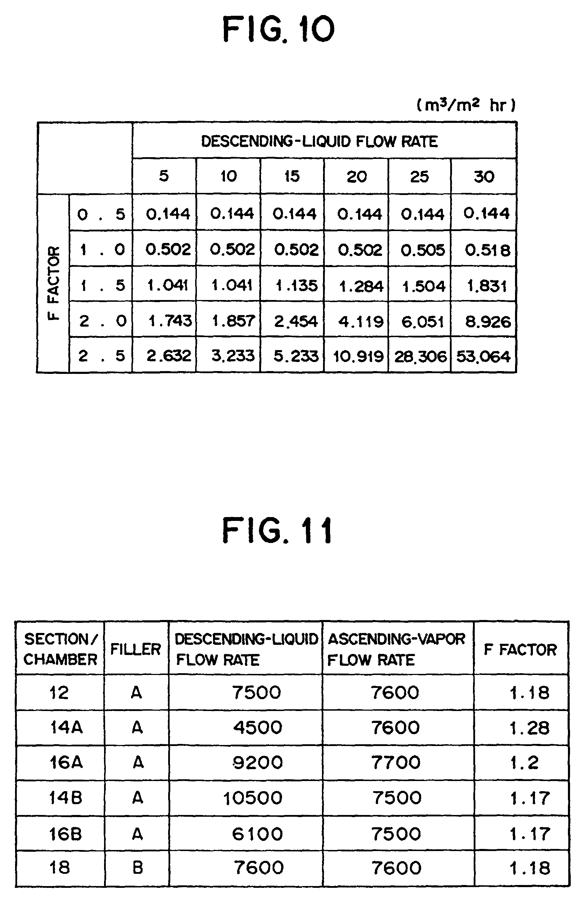

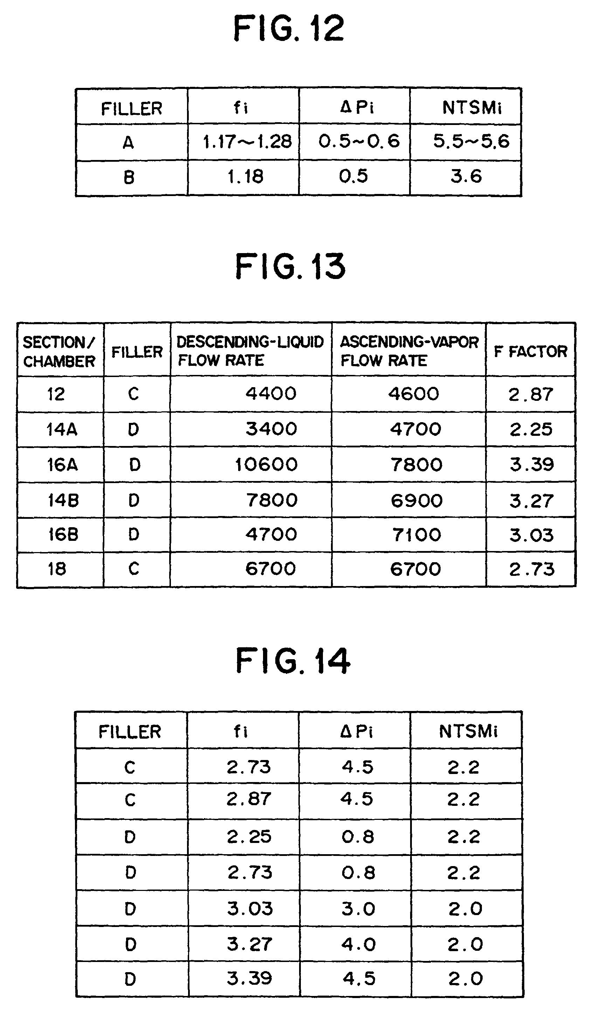

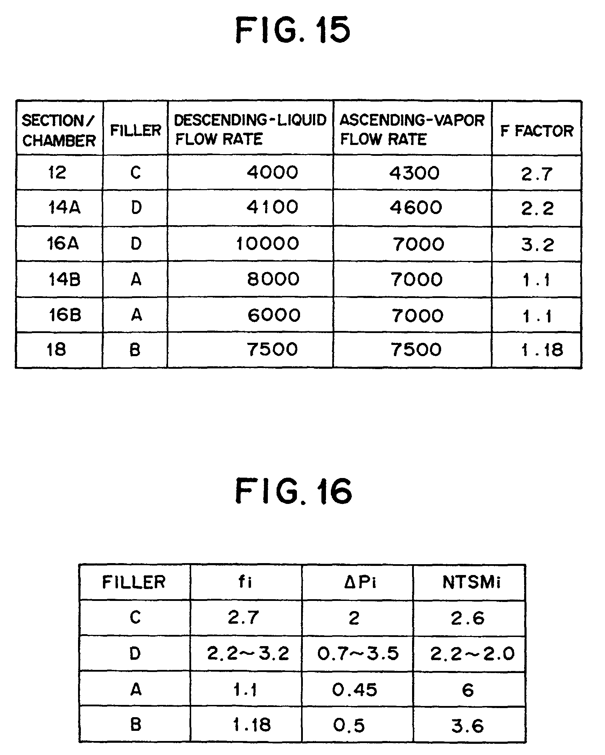

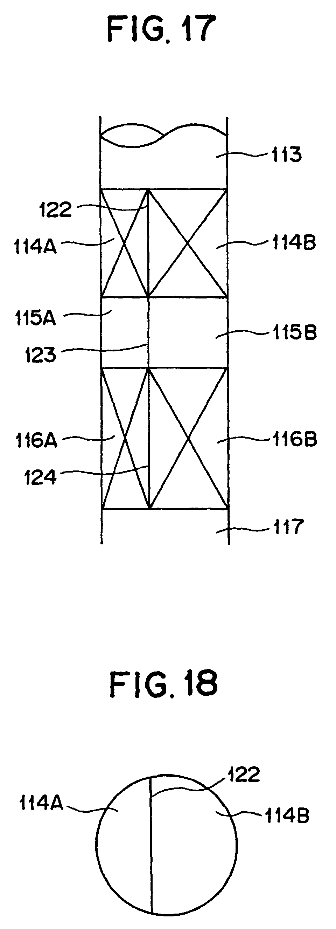

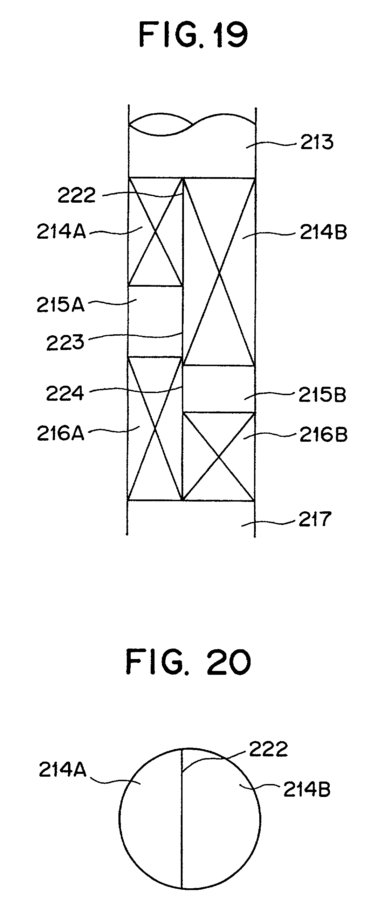

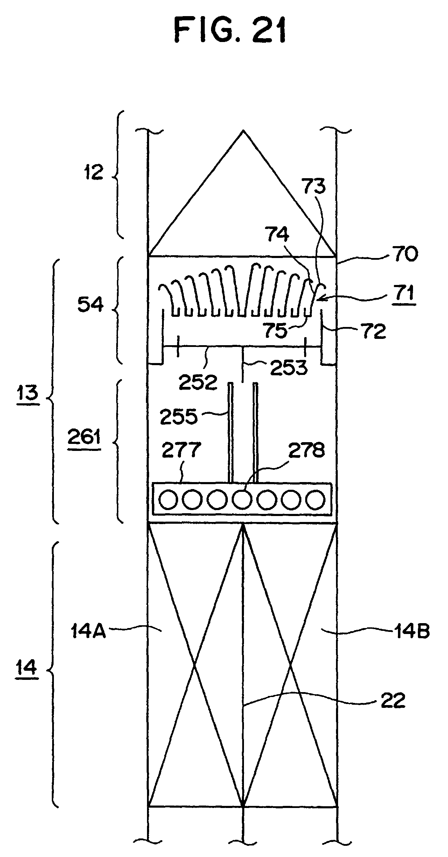

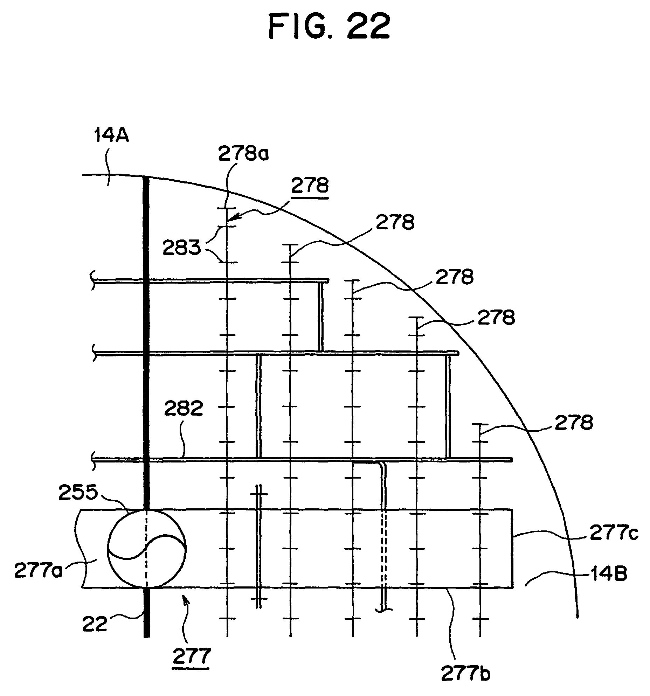

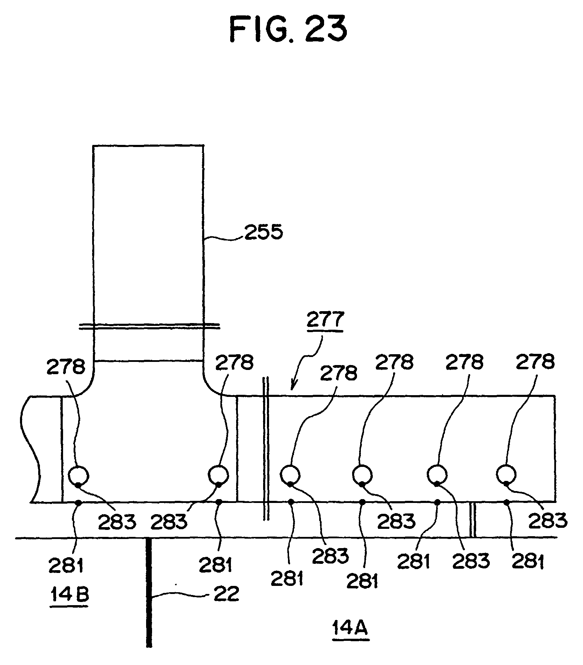

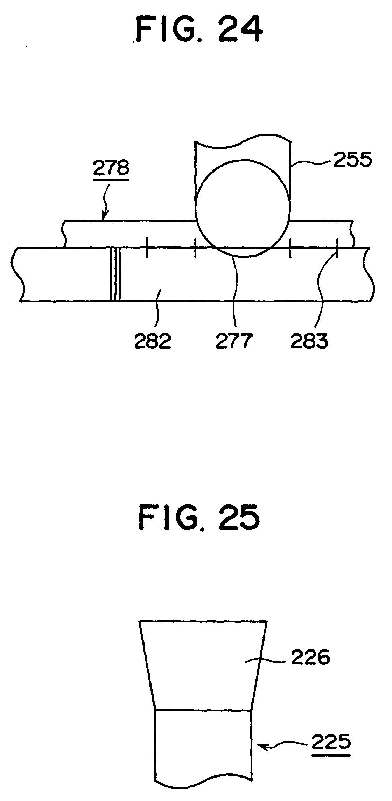

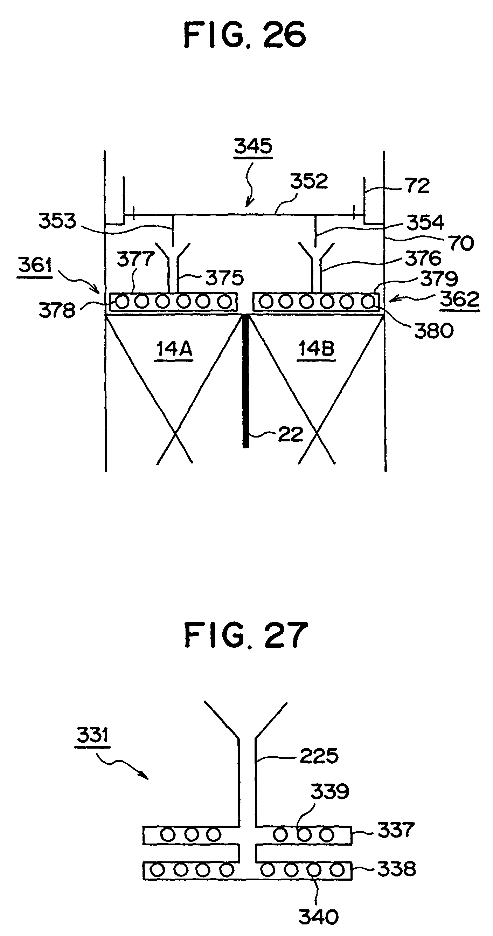

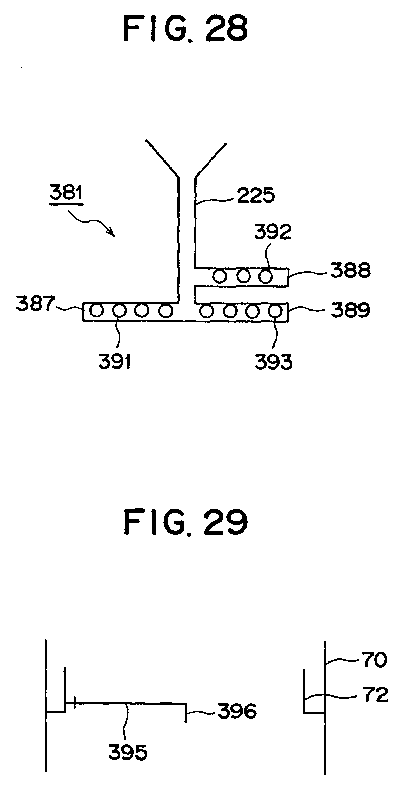

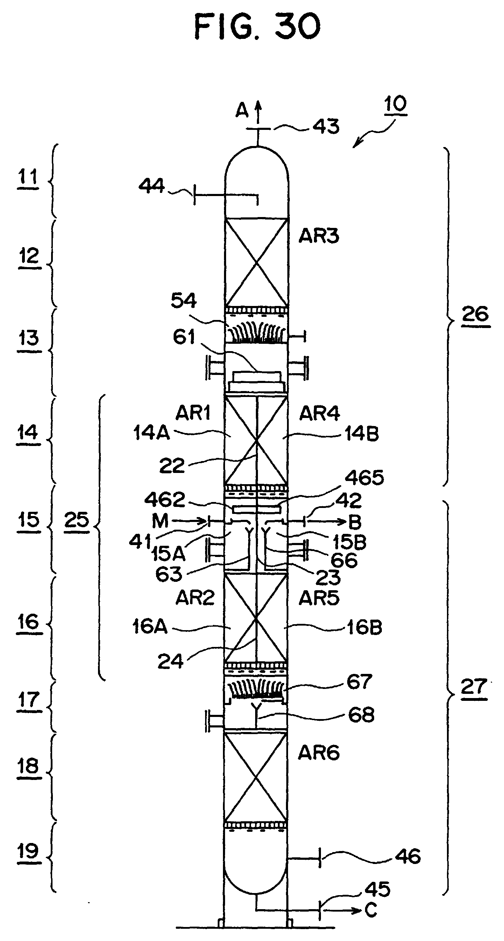

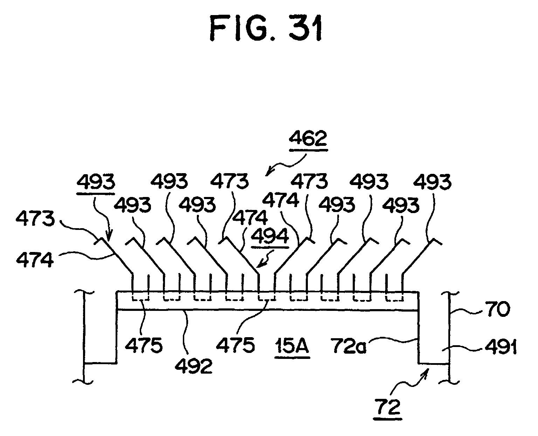

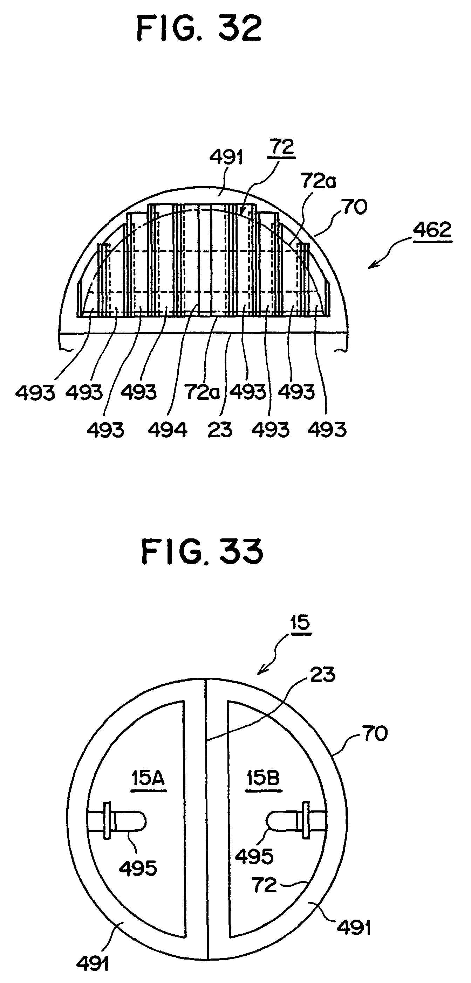

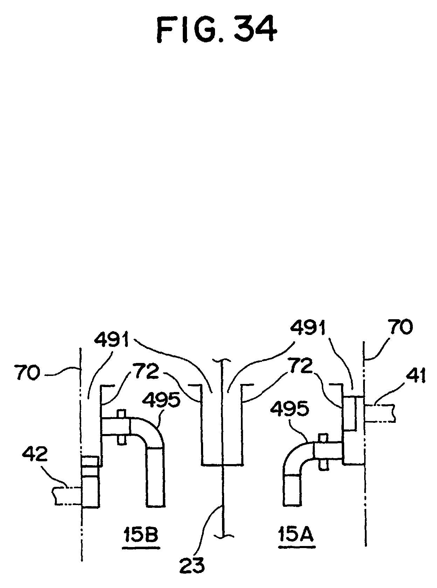

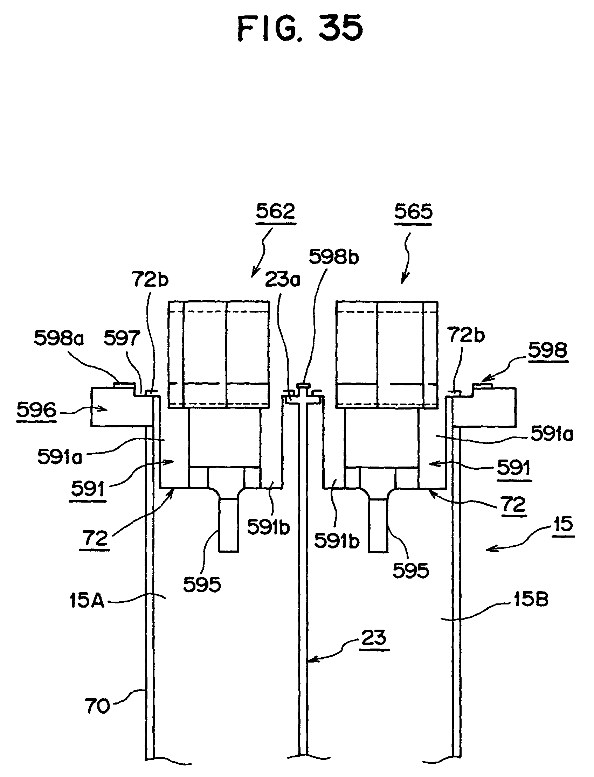

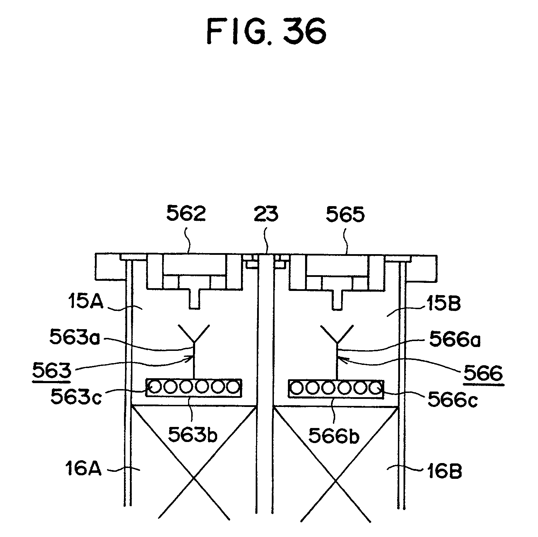

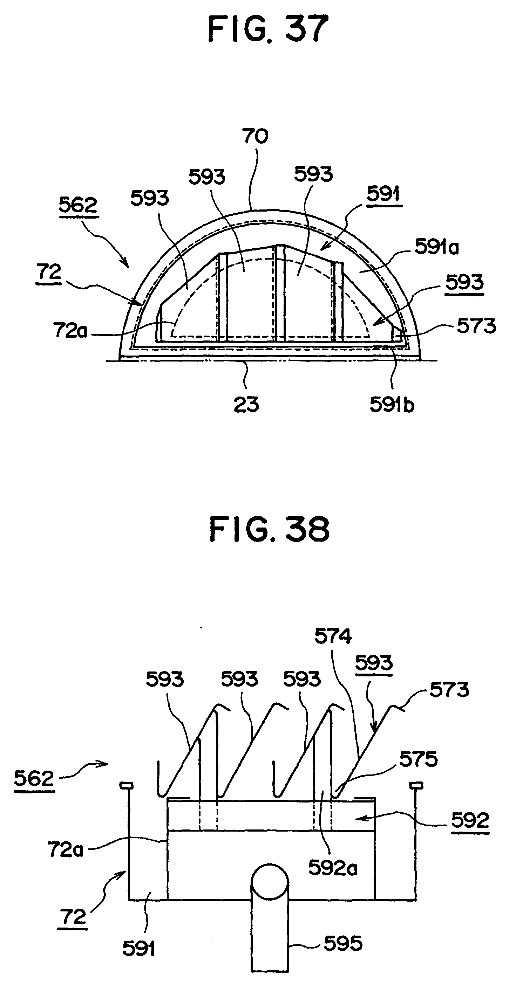

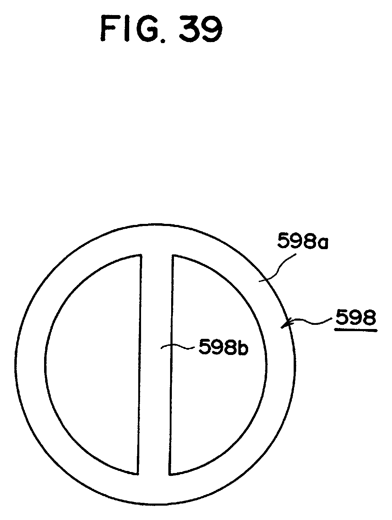

FIG. 1 is a conceptual view of a coupling-type distillation column in a first embodiment of the present invention; FIG. 2 is a conceptual view of a distillation apparatus in the first embodiment of the present invention; FIG. 3 is a view for explaining a distributor of a third section in the first embodiment of the present invention; FIG. 4 is a plan view of the distributor of the third section in the first embodiment of the present invention; FIG. 5 is a side view of the distributor of the third section in the first embodiment of the present invention; FIG. 6 is a detailed view of a first essential portion of the distributor of the third section in the first embodiment of the present invention; FIG. 7 is a detailed view of a second essential portion of the distributor of the third section in the first embodiment of the present invention; FIG. 8 is a plan view showing essential portions of a distributor of a fifth section in the first embodiment of the present invention; FIG. 9 is a view showing the state of connection between a stand pipe and a main header in the first embodiment of the present invention; FIG. 10 is a table showing the result of simulation of pressure loss in the first embodiment of the present invention; FIG. 11 is a table showing characteristics of a coupling-type distillation column in a second embodiment of the present invention; FIG. 12 is a table showing properties of packings in the second embodiment of the present invention; FIG. 13 is a table showing characteristics of a coupling-type distillation column in a third embodiment of the present invention; FIG. 14 is a table showing properties of packings in the third embodiment of the present invention; FIG. 15 is a table showing characteristics of a coupling-type distillation column in a fourth embodiment of the present invention; FIG. 16 is a table showing properties of packings in the fourth embodiment of the present invention; FIG. 17 is a conceptual view of essential portions of a coupling-type distillation column in a fifth embodiment of the present invention; FIG. 18 is a sectional view of essential portions of the coupling-type distillation column in the fifth embodiment of the present invention; FIG. 19 is a conceptual view of essential portions of a coupling-type distillation column in the sixth embodiment of the present invention; FIG. 20 is a sectional view of essential portions of the coupling-type distillation column in the sixth embodiment of the present invention; FIG. 21 is a view for explaining a distributor in a seventh embodiment of the present invention; FIG. 22 is a plan view of essential portions of the distributor in the seventh embodiment of the present invention; FIG. 23 is a view showing the state of connection between a stand pipe and a main header in the seventh embodiment of the present invention; FIG. 24 is a view showing the state of connection between the main header and an arm tube in the seventh embodiment of the present invention; FIG. 25 is a view for explaining a stand pipe in an eighth embodiment of the present invention; FIG. 26 is a schematic view of essential portions of a coupling-type distillation column in a ninth embodiment of the present invention; FIG. 27 is a schematic view of a distributor in a tenth embodiment of the present invention; FIG. 28 is a schematic view of a distributor in an eleventh embodiment of the present invention; FIG. 29 is a schematic view of essential portions of a coupling-type distillation column in a twelfth embodiment of the present invention; FIG. 30 is a conceptual view of a coupling-type distillation column in a thirteenth embodiment of the present invention; FIG. 31 is a sectional view of essential portions of a collector in the thirteenth embodiment of the present invention; FIG. 32 is a plan view of the collector in the thirteenth embodiment of the present invention; FIG. 33 is a plan view of a collector box in the thirteenth embodiment of the present invention; FIG. 34 is a sectional view of the collector box in the thirteenth embodiment of the present invention; FIG. 35 is a view showing the state of mounting of a collector in a fourteenth embodiment of the present invention; FIG. 36 is a sectional view of essential portions of a coupling-type distillation column in the fourteenth embodiment of the present invention; FIG. 37 is a plan view of the collector in the fourteenth embodiment of the present invention; FIG. 38 is a sectional view of the collector in the fourteenth embodiment of the present invention; and FIG. 39 is a view showing a gasket in the fourteenth embodiment of the present invention.

BEST MODE FOR CARRYING OUT THE INVENTION

The embodiments of the present invention will next be described in detail with reference to the drawings.
FIG. 1 is a conceptual view of a coupling-type distillation column in a first embodiment of the present invention. FIG. 2 is a conceptual view of a distillation apparatus in the first embodiment of the present invention.

In the drawings, reference numeral 10 denotes a coupling-type distillation column. The coupling-type distillation column 10 includes a first section 11, a second section 12, a third section 13, a fourth section 14, a fifth section 15, a sixth section 16, a seventh section 17, an eighth section 18, and a ninth section 19.

In a column body serving as a shell of the coupling-type distillation column 10, a partition 22 divides the fourth section 14 into a first chamber 14A and a second chamber 14B; a partition 23 divides the fifth section 15 into a first chamber 15A and a second chamber 15B; and a partition 24 divides the sixth section 16 into a first chamber 16A and a second chamber 16B. The first chambers 14A-16A are adjacent to the second chambers 14B-16B, respectively. The first chambers 14A-16A constitute a first distillation section 25; the first section 11, the second section 12, the third section 13, and the second chamber 14B constitute a second distillation section 26; and the second chambers 15B and 16B, the seventh section 17, the eighth section 18, and the ninth section 19 constitute a third distillation section 27.

Notably, the partitions 22-24 can be made heat insulating through employment of a design such that the partitions 22-24 are formed of an insulating material or a design such that the interiors of the partitions 22-24 are made vacuum. In this case, since there can be reduced heat transmission between the first chamber 14A and the second chamber 14B, between the first chamber 15A and the second chamber 15B, and between the first chamber 16A and the second chamber 16B, the efficiency of distillation can be enhanced.

The fifth section 15 is disposed substantially at the center of the coupling-type distillation column 10. A feed nozzle 41 is formed at the first chamber 15A, and a side cut nozzle 42 is formed at the second chamber 15B. The first section 11 is disposed at the top of the coupling-type distillation column 10. A vapor outlet 43 and a reflux liquid inlet 44, which are connected to a condenser 31, are formed at the first section 11. The ninth section 19 is disposed at the bottom of the coupling-type distillation column 10. A column-bottom liquid outlet 45 and a vapor inlet 46, which are connected to an evaporator 32, are formed at the ninth section 19. The vapor outlet 43 constitutes first discharge means; the side cut nozzle 42 constitutes second discharge means; and the column-bottom liquid outlet 45 constitutes third discharge means.

In the thus-configured coupling-type distillation column 10, a mixture which predominantly contains components A-C is fed as a material liquid M to the feed nozzle 41. Component A is lower in boiling point than component B, which in turn is lower in boiling point than component C. Components A-C constitute first through third components; and the coupling-type distillation column 10, the condenser 31, the evaporator 32, etc. constitute a distillation apparatus.

In the first distillation section 25, the first chamber 14A disposed above the feed nozzle 41 forms an enriching section AR1, and the first chamber 16A disposed below the feed nozzle 41 forms an exhaust section AR2. In the second distillation section 26, the second section 12 connected to and disposed above the upper end of the first distillation section 25 forms an enriching section AR3, and the second chamber 14B disposed below the upper end of the first distillation section 25 while being adjacent to the enriching section AR1 forms an exhaust section AR4. In the third distillation section 27, the second chamber 16B connected to and disposed above the lower end of the first distillation section 25 while being adjacent to the exhaust section AR2 forms an enriching section AR5, and the eighth section 18 disposed below the lower end of the first distillation section 25 forms an exhaust section AR6.

As described above, the upper end of the first distillation section 25 is connected to the substantial center of the second distillation section 26, and the lower end of the first distillation section 25 is connected to the substantial center of the third distillation section 27.

According to a method for distillation by means of the above-configured distillation apparatus, the material liquid M fed through the feed nozzle 41 descends in the exhaust section AR2, during which vapor rich in components A and B is generated in an upper portion of the exhaust section AR2, and liquid rich in components B and C is generated in a lower portion of the exhaust section AR2, The liquid rich in components B and C is fed to the third distillation section 27 from the lower end of the first distillation section 25.

The liquid rich in components B and C is evaporated through application of heat in the third distillation section 27 to become vapor rich in components B and C. The thus-generated vapor ascends in the exhaust section AR2, during which the vapor contacts the material liquid M, causing vapor rich in components A and B to evaporate from the material liquid M.

The vapor rich in components A and B ascends in the enriching section AR1 and is then fed to the second distillation section 26 from the upper end of the first distillation section 25. Subsequently, the vapor rich in components A and B is condensed into liquid rich in components A and B through cooling in the second distillation section 26.

A portion of the liquid rich in components A and B is refluxed to the enriching section AR1 so as to be brought in contact with vapor rich in components A and B ascending in the enriching section AR1.

Thus, vapor rich in components A and B can be fed to the second distillation section 26 from the top end of the first distillation section 25.

In the exhaust section AR6, liquid rich in components B and C descends, during which vapor rich in component B is generated in an upper portion thereof, and liquid rich in component C is generated in a lower portion thereof. Accordingly, the liquid rich in component C is discharged as a column-bottom liquid from the column-bottom liquid outlet 45.

A portion of the liquid rich in column C discharged from the column-bottom liquid outlet 45 is sent to the evaporator 32, where the liquid is evaporated through application of heat to become vapor rich in component C. The vapor rich in component C is fed to the ninth section 19 from the vapor inlet 46. While the vapor rich in component C ascends in the ninth section 19 and the exhaust section AR6, the vapor rich in component C contacts liquid rich in components B and C, causing vapor rich in component B to be generated from the liquid rich in components B and C.

Then, a portion of the vapor rich in component B ascends in the enriching section AR5, during which the portion of the vapor rich in component B contacts the liquid rich in component B from the second distillation section 26 at the upper end of the third distillation section 27 to thereby become liquid rich in component B. The liquid rich in component B obtained at the upper end of the third distillation section 27 is discharged as a side cut liquid; i.e., a product from the side cut nozzle 42.

In the exhaust section AR4 of the second distillation section 26, liquid rich in components A and B descends, during which vapor rich in component A is generated in an upper portion thereof, and liquid rich in component B is generated in a lower portion thereof. The liquid rich in component B obtained at the lower end of the second distillation section 26 is discharged as a product from the side cut nozzle 42.

Then, the vapor rich in component A ascends in the enriching section AR3 and is then discharged from the vapor outlet 43. The discharged vapor rich in component A is sent to the condenser 31, where the vapor is condensed into liquid rich in component A.

As described above, vapor rich in components A and B is separated into vapor rich in component A and liquid rich in component B by means of the second distillation section 26. The vapor rich in component A is discharged from the top of the column and condensed into liquid rich in component A by means of the condenser 31. The liquid rich in component B is discharged as a product from the side cut nozzle 42. Liquid rich in components B and C is separated into liquid rich in component B and liquid rich in component C by means of the third distillation section 27. The liquid rich in component B is discharged as a product from the side cut nozzle 42. The liquid rich in component C is discharged from the bottom of the column.

In order to enhance the efficiency of distillation for component A, the liquid rich in component A is refluxed into the enriching section AR3 from the reflux liquid inlet 44 and brought into contact with vapor rich in components A and B ascending in the enriching section AR3.

Notably, each of the enriching sections AR1, AR3, and AR5 and the exhaust sections AR2, AR4, and AR6 is formed of a packing including a single node. However, depending on relative volatility among components to be obtained through distillation, in order to attain the number of theoretical stages required for distillation, a packing including a plurality of nodes may be formed so as to produce packing properties to be used, Also, a distributor may be disposed between the nodes. Furthermore, the feed nozzle 41 and the side cut nozzle 42 are not necessarily disposed at the same level.

As described above, the material liquid M can be separated into components A-C without use of a plurality of distillation columns.

Since there is no need for repeating heating and cooling in a plurality of distillation columns, the number of instruments, such as a condenser, an evaporator, and a pump, can be reduced. Accordingly, an area to be occupied can be reduced, and the amount of consumption of utilities and consumed energy can be reduced as well, thereby reducing the cost of the distillation apparatus.

Preferably, the coupling-type distillation column 10 has a total of about 30-100 theoretical stages, and about 5-30 theoretical stages are allocated to each of the fourth section 14 and the sixth section 16.

Meanwhile, the third section 13 includes a collector 54 and a channel-type distributor 61. Liquid collected by the collector 54 is distributed to the first chamber 14A and the second chamber 14B of the fourth section 14 in predetermined different portions by means of the distributor 61.

The first chamber 15A of the fifth section 15 includes a collector 62 disposed just above the feed nozzle 41 and a tubular distributor 63 disposed just under the feed nozzle 41. Liquid collected by the collector 62, together with the material liquid M fed through the feed nozzle 41, is fed to the first chamber 16A of the sixth section 16 by means of the distributor 63.

Meanwhile, the second chamber 15B of the fifth section 15 includes a chimney-hat-type collector 65 disposed just above the side cut nozzle 42 and a tubular distributor 66 disposed just under the side cut nozzle 42. Liquid collected by the collector 65 is discharged as a product from the side cut nozzle 42 and fed to the second chamber 16B of the sixth section 16 by means of the distributor 66.

Furthermore, the seventh section 17 includes a collector 67 and a tubular distributor 68. Liquid descending from the sixth section 16 is collected by the collector 67 and is then fed to the eighth section 18 by means of the distributor 68.

In the present embodiment, liquid descending to the third section 13 from above; i.e., from the second section 12 is distributed between the first chamber 14A and the second chamber 14B of the fourth section 14. A distribution ratio is preestablished on the basis of distillation conditions, such as components A-C of the material liquid M, the composition of components A-C of the material liquid M, the number of theoretical stages of the coupling-type distillation column 10, and the required purity (quality) of a product.

The distributor 61 includes an unillustrated distribution section for distributing liquid in a direction perpendicular to the partition 22 and is adapted to make the amount of liquid fed to an upper portion of the first chamber 14A (hereinafter called a "first-chamber upper-portion") and the amount of liquid fed to an upper portion of the second chamber 14B (hereinafter called a "second-chamber upper-portion") differ from each other.

Notably, since the aforementioned product is discharged from the side cut nozzle 42, the amount of liquid fed to the second-chamber upper-portion becomes greater than that fed to the first-chamber upper-portion.

When, in order to obtain products of two or more kinds, distillation conditions are to be modified in the distillation apparatus, the aforementioned distribution ratio must be changed according to the distillation conditions. To meet this end, a plurality of distribution sections of different distribution ratios are disposed. Liquid descending from the second section 12 is collected by the collector 54 and is then selectively fed to the distributor 61 via a selector valve 33 or 34. For example, when a product of a purity of 99. 98 (% by weight) is to be obtained, a distribution ratio of 4:6 is selected. When a product of a purity of 99.999 (% by weight) is to be obtained, a distribution ratio of 2:8 is selected. A load factor is changed to 50-100 (%).

Since liquid can be distributed at the optimum distribution ratio merely through employment of the distribution sections, there is no need for not only disposing many instruments, such as an analyzer, a flow controller, a flow control valve, and a level sensor, for distribution of liquid, but also executing complicated control through operation of the instruments. Accordingly, the size of the distillation apparatus can be reduced, and the cost of the distillation apparatus can be reduced as well.

Next will be described the distributor 61 in the third section 13.

FIG. 3 is a view for explaining a distributor of the third section in the first embodiment of the present invention. FIG. 4 is a plan view of the distributor of the third section in the first embodiment of the present invention. FIG. 5 is a side view of the distributor of the third section in the first embodiment of the present invention. FIG. 6 is a detailed view of a first essential portion of the distributor of the third section in the first embodiment of the present invention. FIG. 7 is a detailed view of a second essential portion of the distributor of the third section in the first embodiment of the present invention.

In FIG. 3, reference numeral 12 denotes a second section; reference numeral 13 denotes a third section; and reference numeral 14 denotes a fourth section. Liquid descending from the second section 12 is collected by the collector 54. The collector 54 includes a cylindrical column body 70; a plurality of collector laminas 71 disposed at predetermined pitches in parallel with one another; and a collector box 72 formed along the inner circumferential wall of the column body 70 and including an annular gutter. Each of the collector laminas 71 includes a curved portion 73 located at an upper end thereof; an inclined portion 74 located at a central portion thereof; and a gutter portion 75 located at a lower end thereof. The curved portions 73 and the gutter portions 75 extend horizontally (in a direction perpendicular to paper in FIG. 3).

Accordingly, liquid descending from the second section 12 impinges against the curved portions 73, flows along the inclined portions 74, and is then received by the gutter portions 75. The received liquid flows horizontally in the gutter portions 75 and then reaches the collector box 72. Subsequently, the liquid in the collector box 72 is discharged to a line L11 from a nozzle 52.

The line L11 branches out into lines L12 and L13. The lines L12 and L13 are connected to the distributor 61 via nozzles 53a and 53b, respectively. Valves V1 and V2 serving as distribution-ratio change means are disposed on the lines L12 and L13, respectively. Through selective opening/closing of the valves V1 and V2, distribution in a first or second mode can be performed by means of the distributor 61. Specifically, in the first mode, liquid is fed to the distributor 61 via the line L12 and is then distributed by the distributor 61. In the second mode, liquid is fed to the distributor 61 via the line L13 and is then distributed by the distributor 61. The valves V1 and V2 are opened/closed manually, or automatically on the basis of a signal from an unillustrated controller.

The distributor 61 includes a first distribution section 77 for distributing liquid in a direction perpendicular to the partition 22; and a second distribution section 78 disposed just under the first distribution section 77 and adapted to distribute liquid distributed by the first distribution section 77, in the same direction as that of the partition 22. Thus, the liquid can be distributed uniformly over the entire fourth section 14.

In the present embodiment, the distribution ratio of liquid in the fourth section 14 between the first chamber 14A and the second chamber 14B can be established and can be changed as well. The distribution ratio is established on the basis of distillation conditions, such as components A-C of the material liquid M, the composition of components A-C of the material liquid M, the number of theoretical stages of the coupling-type distillation column 10 (FIG. 1), and the required purity (quality) of a product. In this case, since a product is discharged from the side cut nozzle 42 located at the second chamber 15B of the fifth section 15, the amount of liquid distributed to the second chamber 14B is greater than that distributed to the first chamber 14A. As mentioned previously, when a product of a purity of 99.98 (% by weight) is to be obtained, a distribution ratio of 4:6 is selected. When a product of a purity of 99.999 (% by weight) is to be obtained, a distribution ratio of 2:8 is selected. A load factor is changed to 50-100 (%).

Accordingly, even when distillation conditions are varied, distillation can be performed in the optimum state, thereby enhancing the efficiency of distillation. As a result, energy consumption in the distillation apparatus can be reduced. Furthermore, since there is no need for employing a complicated instrumentation control system, the size of the distillation apparatus can be reduced, and the cost of the distillation apparatus can be reduced as well.

The first distribution section 77 includes two open static-pressure-type main channels 77a and 77b, which are opened upward and formed adjacent to each other. The main channels 77a and 77b extend across and over the partition 22. A plurality of holes 81 are formed in the bottom of each of the main channels 77a and 77b in a matrix manner. Through appropriate selection of the diameter and number of the holes 81, the distribution ratio is set to, for example, 4:6 Or 2:8.

In order to prevent occurrence of nonuniform liquid level in the main channels 77a and 77b even when a dynamic pressure is generated in association with feed of liquid, buffers 84 are disposed in the main channels 77a and 77b. Thus, the head of liquid within the main channels 77a and 77b can be held constant.

Since the first distribution section 77 is composed of the open static-pressure-type main channels 77a and 77b, a sufficient amount of liquid can be stored in the first distribution section 77, and the stored liquid can descend through the holes 81. Thus, the height of the first distribution section 77 can be lowered accordingly, thereby reducing the size of the distillation apparatus.

Notably, for example, when a product of a single purity is to be separated from the material liquid M through distillation, the distribution ratio does not need to be changed. Thus, a single main channel is employed; the distribution ratio is fixed to, for example, 3:7; and only a load factor is changed to 50-100 (%). Liquid collected by the collector 54 is fed to the distributor 61 without being discharged to the exterior of the column body 70. When products of three different purities are to be separated from the material liquid M through distillation, three main channels are employed in order to change the distribution rate.

The second distribution section 78 includes a plurality of groups of box-type arm channels 78a and 7b, which are opened upward and formed adjacent to one another. The arm channels 78a and 78b are supported by supports 82 while being connected on the group basis by clamps 85. A plurality of holes 83 are formed at equal pitches in the bottoms of the arm channels 78a and 78b. Holes, notches, or the like may be formed in side walls of the arm channels 78a and 78b. The clamps 85 are connected by means of L-shaped members 92, which are fixedly attached to the side walls of the first distribution section 77, and bolts 91. In this manner, the first distribution section 77 is supported by the second distribution section 78. Liquid in the main channel 77a is distributed and fed to the arm channels 78a. Liquid in the main channel 77b is distributed and fed to the arm channels 78b. In order to reliably feed the second distribution section 78 with liquid distributed by the first distribution section 77, stoppers 93 are attached to the supports 82 at relevant positions so as to position the second distribution section 78.

In order to make the amount of liquid to be fed to the first chamber 14A differ from the amount of liquid to be fed to the second chamber 14B, the following parameters are established according to the distribution ratio: the diameter d1 and the number n1 of the holes 81 formed in a portion of the bottom of the main channel 77a which is located in the first chamber 14A; the diameter d2 and the number n2 of the holes 81 formed in a portion of the bottom of the main channel 77a which is located in the second chamber 14B; the diameter d3 and the number n3 of the holes 83 formed in the bottoms of the arm channels 78a disposed on the side of the first chamber 14A; and the diameter d4 and the number n4 of the holes 83 formed in the bottoms of the arm channels 78a disposed on the side of the second chamber 14B. Notably, the diameters d1 and d2 of a portion of the holes 81 may be reduced according to the distribution ratio.

Thus, when the amount of liquid to be fed to the first chamber 14A is represented with q1, and the amount of liquid to be fed to the second chamber 14B is represented with q2, q1 and q2 are expressed as follows.

$$q1 = (\pi/4)\, d1^2 \cdot n1$$
$$= (\pi/4)\, d3^2 \cdot n3$$

$$q2 = (\pi/4)\, d2^2 \cdot n2$$
$$= (\pi/4)\, d4^2 \cdot n4$$

When the diameters d1 and d2 are established according to the distribution ratio, and the numbers n3 and n4 are equalized, the cross-sectional areas of portions of a packing assigned to the individual holes 83 can be equalized.

In order to make the amount q1 of liquid to be fed to the first chamber 14A differ from the amount q2 of liquid to be fed to the second chamber 14B, the following parameters may be established according to the distribution ratio:

the diameter d5 and the number n5 of the holes 81 formed in a portion of the bottom of the main channel 77b which is located in the first chamber 14A; the diameter d6 and the number n6 of the holes 81 formed in a portion of the bottom of the main channel 77b which is located in the second chamber 14B; the diameter d7 and the number n7 of the holes 83 formed in the bottoms of the arm channels 78b disposed on the side of the first chamber 14A; and the diameter d8 and the number n8 of the holes 83 formed in the bottoms of the arm channels 78b disposed on the side of the second chamber 14B.

Since, through selective opening/closing of the valves V1 and V2, the distribution ratio can be changed according to distillation conditions, there is no need for employing a complicated instrumentation control system. Accordingly, the size of the distillation apparatus can be reduced, and the cost of the distillation apparatus can be reduced as well.

Furthermore, since in the first chamber 14A and the second chamber 14B, the amount of liquid descending from the holes 83 can be equalized, there can be prevented occurrence of a channeling phenomenon in the packings contained in the first and second chambers 14A and 14B.

[EMBODIMENTS]

The production capacity of the coupling-type distillation column 10 for producing a product was 40,000 (t/Y); the diameter of the coupling-type distillation column 10 was 1,100 (mm); and packings employed were "BX PACKING (metal gauge)" and "MELLAPAK 350Y (metal sheet)" (trade names, products of Sumitomo Heavy Industries, Ltd. ).

The operating conditions of the coupling-type distillation column 10 are as follows:

Operating pressure: atmospheric pressure
Composition of material liquid M (ordinary industrial product): ethyl acetate 99. 98 (% by weight)
Composition of product (high-purity product): ethyl acetate 99. 999 (% by weight)

By use of a distillation apparatus composed of two distillation columns and the coupling-type distillation column 10 of the present invention, component A of a low boiling point and component C of a high boiling point were removed from the material liquid M, thereby obtaining a product composed of component B; i.e., ethyl acetate of a purity of 99.999 (% by weight).

The distillation apparatus composed of two distillation columns consumed 0.82 (t) of steam per 1 (t) of product and 2.3 (kw) of electricity per 1 (t) of product. By contrast, the coupling-type distillation column 10 consumed 0.7 (t) of steam per 1 (t) of product and 2.0 (kw) of electricity per 1 (t) of product.

The construction cost and the installation area of the coupling-type distillation column 10 were about 65 (%) and 50 (%), respectively, of those of the distillation apparatus composed of two distillation columns.

At a distribution ratio of 2:8, the flow rate of liquid descending in the first chamber 14A was 850-1700 (kg/H), and the flow rate of liquid descending in the second chamber 14B was 3400-6800 (kg/H). At a distribution ratio of 4:6, the flow rate of liquid descending in the first chamber 14A was 1600-3200 (kg/H), and the flow rate of liquid descending in the second chamber 14B was 2400-4800 (kg/H).

Next, the distributor 63 of the fifth section 15 will be described.

FIG. 8 is a plan view showing essential portions of the distributor of the fifth section in the first embodiment of the present invention. FIG. 9 is a view showing the state of connection between a stand pipe and a main header in the first embodiment of the present invention.

As shown in the drawings, the distributor 63 includes an open static-pressure-type stand pipe 155, which extends vertically, opens upward, and is adapted to establish a predetermined head through accumulation of liquid discharged from the collector 62 (FIG. 1); a main header 177, which serves as the first distribution section for distributing liquid in a direction perpendicular to the partition 23; and a plurality of arm tubes 178, which are connected to the main header 177 and serve as the second distribution section for distributing liquid having been distributed by the main header 177, in the same direction as that of the partition 23.

In the present embodiment, since the exhaust section AR2 of the first distillation section 25 and the enriching section AR5 of the third distillation section 27 are adjacent to each other while being separated by the partition 24, the exhaust section AR2 assumes the form of a semicylinder. As a result, the liquid cannot be distributed uniformly over the entire exhaust section AR2.

Thus, the main header 177 extends radially outward from a position which is located substantially at the center of the column body 70 and adjacent to the partition 23. Also, the main header 177 includes a connection portion 177a which is connected to the lower end of the stand pipe 155 at a position biased toward the partition 23 from the center of the first chamber 15A; a first arm portion 177b connected to the connection portion 177a at the far side with respect to the partition 23; and a second arm portion 177c connected to the connection portion 177a at the near side with respect to the partition 23. The arm tubes 178 are disposed at equal pitches. In the present embodiment, a single arm tube 178 is disposed while crossing the connection portion 177a; three arm tubes 178 are disposed while crossing the first arm portion 177b; and a single arm tube 178 is disposed while crossing the second arm portion 177c. The stand pipe 155 is disposed on the main header 177 at a position located about two-fifth the length of the main header 177 from the end of the main header 177 which faces the partition 23.

An end of the first arm portion 177b and that of the second arm portion 177c are closed by end plates 177d and 177e, respectively. Accordingly, a liquid head established in the stand pipe 55 is transmitted uniformly within the main header 177. Reference numerals 191 and 192 denote coupling flanges, and reference numerals 193 and 194 denote stoppers.

A plurality of holes 181 are formed in the bottom of the main header 177. The arm tubes 178 are fixed in place while communicating with the main header 177 in the vicinity of the bottom of the main header 177, and extends in a direction perpendicular to the main header 177 while being supported by supports 182. A plurality of holes 183 are formed at equal pitches in the bottom of each of the arm tubes 178. The opposite ends of each of the arm tubes 178 are closed with end plates 178a and 178b.

Since the main header 177 and the arm tubes 178 are connected in the above manner, liquid in the main header 177 is distributed among the arm tubes 178.

Since the main header 177 is connected to the lower end of the stand pipe 155 at a position biased toward the partition 23 from the center of the first chamber 15A, a pressure loss associated with flow resistance within the main header 177 is made the same among the arm tubes 178.

Accordingly, the liquid can be distributed uniformly over the entire exhaust section AR2.

In the present embodiment, the holes 183 are formed in each arm tube 178 at equal pitches. However, the holes 183 may be formed at unequal pitches to thereby distribute the liquid uniformly over the entire exhaust section AR2.

The present embodiment is described while mentioning the distributor 63 disposed above the exhaust section AR2. The distributor 66 disposed above the enriching section AR5 of the third distillation section 27 is also configured in a manner similar to that of the distributor 63.

When the coupling-type distillation column 10 is designed, there must be determined the number of thoretical stages per meter NTSM (stages/m) in each chamber; height equivalent to a theoretical plate HETP (mm); F factor

$$f\ ((m/s)/\ \sqrt{kg/m^3});$$

and pressure loss $\Delta P$ per unit height in chamber (mmHg/m). F factor f is a parameter indicative of a real velocity with vapor pressure taken into consideration. When column velocity is represented with u, and vapor density is represented with $\rho$ (kg/m$^3$), F factor f is expressed as follows.

$$f = u\ \sqrt{\rho}$$

When pressure is represented with P (mmHg), temperature is represented with T ($^\circ$ K), and the number of moles is represented with M, the vapor density $\rho$ is expressed as follows.

$$\rho = 273.2\ \cdot\ P\ \cdot\ M/22.41 \times 760\ \cdot\ T$$
$$= P\ \cdot\ M/(62.36)\ \cdot\ T$$

When liquid descends in a chamber where a packing is disposed, while vapor ascends in the chamber, the descending liquid causes occurrence of a pressure loss in a flow of the vapor. In the present embodiment, since the distributor 61 causes the amount of liquid to be fed to the first-chamber upper-portion to differ from the amount of liquid to be fed to the second-chamber upper-portion, the flow rate of liquid descending in the first chamber 14A differs from that in the second chamber 14B; i.e., the descending-liquid flow rate differs between the first chamber 14A and the second chamber 14B. As a result, the first chamber 14A and the second chamber 14B differ in pressure loss. Thus, the flow rate of vapor ascending in the first chamber 14A differs from that in the second chamber 14B; i.e., the ascending-vapor flow rate differs between the first chamber 14A and the second chamber 14B.

Thus, the F factor f is established such that even when the descending-liquid flow rate differs, a pressure loss is equalized.

FIG. 10 is a table showing the result of simulation of pressure loss in the first embodiment of the present invention.

In this case, the simulation was performed under the following conditions.

Descending material: ethyl acetate (MW = 88.1)
Operating pressure: atmospheric pressure (760 (mmHg))

Operating temperature: 76 ( °C)

Density of vapor: 3.0785 (kg/m$^3$ )

Density of liquid: 900 (kg/m$^3$ )

Surface tension: 20 (dyn/cm)

Filler A: BX PACKING

Descending-liquid flow rate: 5, 10, 15, 20, 25, and 30 (m$^3$ /m$^2$ hr)

Relationship between F factor

$$f\ ((m/s)\sqrt{kg/m^3})$$

and ascending-vapor flow rate ( kg/m$^2$ hr) per unit cross-sectional area:

0.5 3200

1.0 6300

1.5 9500

2.0 12600

2.5 15800

As mentioned above, BX PACKING was used as the packing A, and the F factor f was varied within a range of 0.5 to 2.5. As seen from FIG. 10, at an F factor f of 0.5-1.5, pressure loss remains almost unchanged even when the descending-liquid flow rate varies.

Thus, the present embodiments employs BX PACKING as the packing A for the second section 12 (FIG. 1), the fourth section 14, the sixth section 16, and the eighth section 18, and an F factor f of 1.0-1.5. Accordingly, since pressure loss becomes substantially constant among the second section 12, the fourth section 14, the sixth section 16, and the eighth section 18, a pressure loss arising in the first chambers 14A and 16A is equalized with the sum of pressure losses arising in the second chambers 14B and 16B. As a result, since descending liquid does not influence ascending vapor, the vapor ascends while being distributed uniformly. Notably, an F factor f of 0.5-1.0 may be employed. In this case, the cross-sectional area of a chamber increases to an extent corresponding to a drop in real velocity.

Distribution of vapor does not require disposition of many instruments, nor does it require execution of complicated control through operation of the instruments. Accordingly, the size of the distillation apparatus can be reduced, and the cost of the distillation apparatus can be reduced as well.

Since the descending of liquid and the ascending of vapor within the coupling-type distillation column 10 can be smoothened, occurrence of a channeling phenomenon in the packings A contained in the chambers can be prevented. Also, occurrence of maldistribution can be prevented.

In the coupling-type distillation column 10, since the partitions 22-24 are disposed in the fourth section 14, the fifth section 15, and the sixth section 16, respectively, a difference in pressure loss is likely to arise between the first chamber 14A and the second chamber 14B and between the first chamber 16A and the second chamber 16B. Thus, second through fourth embodiments of the present invention select packings so as to prevent arising of a difference in pressure loss between the first chamber 14A and the second chamber 14B and between the first chamber 16A and the second chamber 16B. The second through the fourth embodiments will next be described.

FIG. 11 is a table showing characteristics of a coupling-type distillation column in the second embodiment of the present invention. FIG. 12 is a table showing properties of packings in the second embodiment of the present invention.

In this case, BX PACKING was used as packing A for the second section 12, the first chamber 14A and the second chamber 14B of the fourth section 14, and the first chamber 16A and the second chamber 16B of the sixth section 16, whereas MELLAPAK 350Y was used as packing B for the eighth section 18.

Herein, a pressure loss arising in the first chambers 14A and 16A is represented with $\delta P_1$ , and a pressure loss arising in the second chambers 14B and 16B is represented with $\delta P_2$ . Other parameters for the first chambers 14A and 16A and the second chambers 14B and 16B are represented as follows: the number of theoretical stages: $NTS_i$ (i = 14A, 16A, 14B, 16B); the number of theoretical stages per meter: $NTSM_i$ (i = 14A, 16A, 14B, 16B) (stages/m); and pressure loss per unit height: $\Delta P_i$ (i = 14A, 16A, 14B, 16B).

The pressure loss $\delta P_1$ is expressed as follows.

$$\delta P_1 = (NTS_{14A}/NTSM_{14A}) \cdot \Delta P_{14A} + (NTS_{14B}/NTSM_{14B}) \cdot \Delta P_{14B}$$

The pressure loss $\delta P_2$ is expressed as follows.

$$\delta P_2 = (NTS_{16A}/NTSM_{16A}) \cdot \Delta P_{16A} + (NTS_{16B}/NTSM_{16B}) \cdot \Delta P_{16B}$$

The F factor $f_i$ (i = 14A, 16A, 14B, 16B) is calculated with reference to FIG. 11, and the pressure loss $\Delta P_i$ and the number of theoretical stages per meter $NTSM_i$ (stages/m) corresponding to the F factor $f_i$ are calculated with reference to FIG. 12, thereby setting the number of theoretical stages $NTS_i$ to a predetermined value. As a result, the pressure losses $\delta P_1$ and $\delta P_2$ can establish the following relationship.

$$\delta P_1 \fallingdotseq \delta P_2$$

FIG. 12 merely shows the ranges, not discrete values, of the F factor $f_i$, the pressure loss $\Delta P_i$ , and the number of theoretical stages per meter $NTSM_i$.

Next, a third embodiment of the present invention will be described.

FIG. 13 is a table showing characteristics of a coupling-type distillation column in the third embodiment of the present invention. FIG. 14 is a table showing properties of packings in the third embodiment of the present invention.

MELLAPAK 250Y (trade name, product of Sumitomo Heavy Industries, Ltd.) was used as packing C for the second section 12 and the eighth section 18, whereas MELLAPAK 250X (trade name, product of Sumitomo Heavy Industries, Ltd.) was used as packing D for the first chamber 14A and the second chamber 14B of the fourth section 14 and the first chamber 16A and the second chamber 16B of the sixth section 16. In this case, since MELLAPAK 250Y was used in the second section 12 and the eighth section 18, liquid flow and vapor flow in the coupling-type distillation column 10 (FIG, 1) could be stabilized. Since MELLAPAK 250X is used in the first chamber 14A and the second chamber 14B of the fourth section 14 and the first chamber 16A and the second chamber 16B of the sixth section 16, even when the ascending-vapor flow rate is high, it does not influence pressure losses $\delta P_1$ and $\delta P_2$.

For example, the number of theoretical stages $NTS_i$ assumes the following values.

$NTS_{14A}$ = 14 (stages)
$NTS_{14B}$ = 13 (stages)
$NTS_{16A}$ = 12 (stages)
$NTS_{16B}$ = 7 (stages)

Then, pressure loss $\delta P_1$ arising in the first chambers 14A and 16A is calculated as follows.

$$
\begin{aligned}
\delta P_1 &= (NTS_{14A}/NTSM_{14A}) \cdot \Delta P_{14A} + (NTS_{14B}/NTSM_{14B}) \cdot \Delta P_{14B} \\
&= (14/2.2) \times 0.8 + (13/2.0) \times 4.5 \\
&= 34.34 \text{ (mmHg)}
\end{aligned}
$$

Pressure loss $\delta P_2$ arising in the second chambers 14B and 16B is calculated as follows.

$$
\begin{aligned}
\delta P_2 &= (NTS_{16A}/NTSM) \cdot \Delta P_{16A} + (NTS_{16B}/NTSM) \cdot \Delta P_{16B} \\
&= (12/2.0) \times 4.0 + (7/2.0) \times 3.0 = 34.5 \text{ (mmHg)}
\end{aligned}
$$

Accordingly, the pressure losses $\delta P_1$ and $\delta P_2$ establish the following relationship.

$$\delta P_1 \fallingdotseq \delta P_2$$

Next, a fourth embodiment of the present invention will be described.

FIG. 15 is a table showing characteristics of a coupling-type distillation column in the fourth embodiment of the present invention. FIG. 16 is a table showing properties of packings in the fourth embodiment of the present invention.

The fourth embodiment is effectively applicable to the case where the number of theoretical stages of the first chambers 14A and 16A ($NTS_{14A}$ + $NTS_{16A}$) differs from that of the second chambers 14B and 16B ($NTS_{14B}$ + $NTS_{16B}$), and the ascending-vapor flow rate of the first chambers 14A and 16A is different from that of the second chambers 14B and 16B. Filler C is disposed in the second section 12; packing D is disposed in the first chambers 14A and 16A; packing A is disposed in the second chambers 14B and 16B; and packing B is disposed in the eighth section 18.

As a result, pressure loss $\delta P_1$ arising in the first chambers 14A and 16A and $\delta P_2$ arising in the second chambers 14B and 16B can establish the following relationship.

$$\delta P_1 \fallingdotseq \delta P_2$$

Next, fifth and sixth embodiments of the present invention will be described. The fifth and sixth embodiments are intended to equalize $\delta P_1$ and $\delta P_2$ when $\delta P_1$ and $\delta P_2$ cannot be equalized through mere selection of packings A-D.

FIG. 17 is a conceptual view of essential portions of a coupling-type distillation column in the fifth embodiment of the present invention. FIG. 18 is a sectional view of essential portions of the coupling-type distillation column in the fifth embodiment of the present invention.

In the drawings, reference numeral 113 denotes a third section; reference numerals 114A-116A denote first chambers; reference numerals 114B-116B denote second chambers; reference numeral 117 denotes a seventh section; and reference numerals 122-124 denote partitions.

The present embodiment is effectively applicable to the case where certain distillation conditions of a coupling-type distillation column might cause the ascending-vapor flow rate in the first chambers 114A and 116A to differ from that in the second chambers 114A and 116B. In order to cope with the situation, in the present embodiment, the partitions 122-124 are disposed eccentrically such that cross-sectional area S1 of the first chambers 114A and 116A is smaller than cross-sectional area S2 of the second chambers 114B and 116B; specifically, as follows.

$$S1:S2 = 3:7$$

Notably, when the ascending-vapor flow rate in the first chambers 114A and 116A is represented with Q1; the ascending-vapor flow rate in the second chambers 114B and 116B is represented with Q2; the column velocity in the first chambers 114A and 116B is represented with u1; and the column velocity in the second chambers 114B and 116B is represented with u2, the column velocities u1 and u2 are expressed as follows.

$$u1 = (Q1/S1) \times 3600 \ (m/s)$$

$$u2 = (Q2/S2) \times 3600 \ (m/s)$$

Through modification of the cross-sectional areas S1 and S2, the column velocities u1 and u2 can be modified for harmonization.

As a result, F factors $f_{114A}$ and $f_{116A}$ of the first chambers 114A and 116A and F factors $f_{114B}$ and $f_{116B}$ of the second chambers 114B and 116B can be modified. Also, pressure losses per unit height $\Delta P_{11}$ 4A and $\Delta P_{116A}$ in the first chambers 114A and 116A and pressure losses per unit height $\Delta P_{114B}$ and $\Delta P_{116B}$ in the second chambers 114B and 116B can be modified.

In the present embodiment, through employing different cross-sectional areas S1 and S2, pressure losses per unit height $\Delta P_{114A}$ and $\Delta P_{116A}$ in the first chambers 114A and 116A and pressure losses per unit height $\Delta P_{114B}$ and $\Delta P_{116B}$ in the second chambers 114B and 116B are equalized, thereby equalizing $\delta P_1$ and $\delta P_2$ .

Next, a sixth embodiment of the present invention will be described.

FIG. 19 is a conceptual view of essential portions of a coupling-type distillation column in the sixth embodiment of the present invention. FIG. 20 is a sectional view of essential portions of the coupling-type distillation column in the sixth embodiment of the present invention.

In the drawings, reference numeral 213 denotes a third section; reference numerals 214A-216A denote first chambers; reference numerals 214B-216B denote second chambers; reference numeral 217 denotes a seventh section; and reference numerals 222-224 denote partitions.

The present embodiment is effectively applicable to the case where certain distillation conditions of a coupling-type distillation column (night cause the ascending-vapor flow rate in the first chambers 214A and 216A to differ from that in the second chambers 214B and 216B. In order to cope with the situation, in the present embodiment, the partitions 222-224 are disposed eccentrically such that cross-sectional area S1 of the first chambers 214A and 216A is smaller than cross-sectional area S2 of the second chambers 214B and 216B; specifically, as follows.

$$S1:S2 = 4:6$$

Also, the height of the packing in the first chamber 214A is lower than that in the second chamber 214B, and the height of the packing in the first chamber 216A is higher than that in the second chamber 216B.

The above-described embodiments employ as packings BX PACKING, MELLAPAK 250X, MELLAPAK 250Y, and MELLAPAK 350Y. However, there may be employed CY PACKING, MELLAPAK 125X, MELLAPAK 125Y, MELLAPAK 170X, MELLAPAK 170Y, MELLAPAK 2X, MELLAPAK 2Y, MELLAPAK 500X, MELLAPAK 500Y, and MELLAPAK 750Y (trade names, products of Sumitomo Heavy Industries, Ltd.).

Next, a seventh embodiment of the present invention will be described.

FIG. 21 is a view for explaining a distributor in the seventh embodiment of the present invention. FIG. 22 is a plan view of essential portions of the distributor in the seventh embodiment of the present invention. FIG. 23 is a view showing the state of connection between a stand pipe and a main header in the seventh embodiment of the present invention. FIG. 24 is a view showing the state of connection between the main header and an arm tube in the seventh embodiment of the present invention.

In the drawings, reference numeral 12 denotes a second section; reference numeral 13 denotes a third section; and reference numeral 14 denotes a fourth section. Liquid descending from the second section 12 is collected by the collector 54. The collector 54 includes a cylindrical column body 70; a plurality of collector laminas 71 disposed at predetermined pitches in parallel with one another; and a collector box 72 formed along the inner circumferential wall of the column body 70 and including an annular gutter. Each of the collector laminas 71 includes a curved portion 73 located at an upper end thereof; an inclined portion 74 located at a central portion thereof; and a gutter portion 75 located at a lower end thereof. The curved portions 73 and the gutter portions 75 extend horizontally (in a direction perpendicular to paper in FIG. 21).

Accordingly, liquid descending from the second section 12 impinges against the curved portions 73, flows along the inclined portions 74, and is then received by the gutter portions 75. The received liquid flows horizontally in the gutter portions 75 and then reaches the collector box 72. Subsequently, the liquid in the collector box 72 is transmitted to the center of the column body 70 by means of a liquid collection pipe 252. Then, the liquid is discharged to a distributor 261 from a discharge pipe 253.

The distributor 261 includes an open static-pressure-type stand pipe 255, which opens upward, extends vertically, and is adapted to establish a predetermined head through accumulation of liquid discharged from the discharge pipe 253; a main header 277, which serves as the first distribution section for distributing liquid in a direction perpendicular to the partition 22; and a plurality of arm tubes 278, which are connected to the main header 277 and serve as the second distribution section for distributing liquid having been distributed by the main header 277, in the same direction as that of the partition 22. Accordingly, the liquid can be distributed uniformly over the entire fourth section 14.

In the present embodiment, the distribution ratio of liquid in the fourth section 14 between the first chamber 14A and the second chamber 14B can be established and can be changed as well. The distribution ratio is established on the basis of distillation conditions, such as components A-C of the material liquid M, the composition of components A-C of the material liquid M, the number of theoretical stages of the coupling-type distillation column 10 (FIG. 1), and the required purity (quality) of a product. In this case, since a product is discharged from the side cut nozzle 42 located at the second chamber 15B of the fifth section 15, the amount of liquid distributed to the second chamber 14B is greater than that distributed to the first chamber 14A. For example, the distribution ratio is set to 2:8 to 5:5 according to the required purity of a product. A load factor within the range of operation is usually set to 1:2.5.

Accordingly, distillation can be performed in the optimum state according to distillation conditions, thereby increasing distillation efficiency. As a result, energy consumption in the distillation apparatus can be reduced. Furthermore, since there is no need for employing a complicated instrumentation control system, an increase in the size of the distillation apparatus can be prevented, thereby reducing the cost of the distillation apparatus.

The main header 277 extends across and over the partition 22 and includes a first arm portion 277a extending toward the first chamber 14A and a second arm portion 277b extending toward the second chamber 14B. The lower end of the stand pipe 255 is connected to the center of the main header 277. An end of the first arm portion 277a and that of the second arm portion 277b are each closed with an end plate 277c. Accordingly, a liquid head established in the stand pipe 255 is transmitted uniformly within the main header 277. A plurality of holes 281 are formed in the bottom of the main header 277.

The arm tubes 278 are fixed in place while communicating with the main header 277 in the vicinity of the bottom of the main header 277, and extends in a direction perpendicular to the main header 277. The arm tubes 278 are supported by supports 282. A plurality of holes 283 are formed at equal pitches in the bottom of each of the arm tubes 278. Notably, holes, notches, or the like may be formed in the arm tubes 278 at side positions. The opposite ends of each of the arm tubes 278 are closed with end plates 278a. Since the main header 277 and the arm tubes 278 are connected in this manner, liquid in the main header 277 is distributed among the arm tubes 278.

In order to make the amount of liquid to be fed to the first chamber 14A differ from the amount of liquid to be fed to the second chamber 14B, the following parameters are established according to the distribution ratio: the diameter $d_{11}$ and the number $n_{11}$ of the holes 281 formed in the first arm portion 277a; the diameter $d_{12}$ and the number $n_{12}$ of the holes 281 formed in the second arm portion 277b; the diameter $d_{13}$ and the number $n_{13}$ of the holes 283 formed in the arm tubes 278 disposed on the side of the first chamber 14A; and the diameter $d_{14}$ and the number $n_{14}$ of the holes 283 formed in the arm tubes 278 disposed on the side of the second chamber 14B.

Thus, when the amount of liquid to be fed to the first chamber 14A is represented with $q_{11}$, and the amount of liquid to be fed to the second chamber 14B is represented with $q_{12}$, $q_{11}$ and $q_{12}$ are expressed as follows.

$$q11=(\pi/4)d11^2 \cdot n11+(\pi/4)d13^2 \cdot n13$$

$$q12=(\pi/4)d12^2 \cdot n12+(\pi/4)d14^2 \cdot n14$$

When the diameters d11 and d12 are established according to the distribution ratio, and the numbers n11 and n12 are equalized, the cross-sectional areas of portions of a packing assigned to the individual holes 281 and 283 can be equalized.

Since, the distribution ratio can be established according to distillation conditions, there is no need for employing a complicated instrumentation control system. Accordingly, the size of the distillation apparatus can be reduced, and the cost of the distillation apparatus can be reduced as well.

Furthermore, since in the first chamber 14A and the second chamber 14B, the amount of liquid descending from the holes 281 and 283 can be equalized, there can be prevented occurrence of a channeling phenomenon in the packings contained in the first and second chambers 14A and 14B.

Next, an eighth embodiment of the present invention will be described.

FIG. 25 is a view for explaining a stand pipe in the eighth embodiment of the present invention.

In this case, a taper portion 226 is formed at the upper end of a stand pipe 225. Accordingly, liquid discharged from the discharge pipe 253 (FIG. 21) enters the stand pipe 225 smoothly via the taper portion 226.

Next, a ninth embodiment of the present invention will be described.

FIG. 26 is a schematic view of essential portions of a coupling-type distillation column in the ninth embodiment of the present invention.

In the drawing, liquid descending from the second section 12 (FIG. 21) is collected by a collector 345. The collector 345 includes a cylindrical column body 70; a plurality of collector laminas 71 disposed at predetermined pitches in parallel with one another; and a collector box 72 formed along the inner circumferential wall of the column body 70 and including an annular gutter.

Liquid descending from the second section 12 is transmitted to the collector box 72. Subsequently, the liquid in the collector box 72 is transmitted to discharge pipes 353 and 354, which are disposed at the center of the first chamber 14A and the center of the second chamber 14B, respectively. Then, the liquid is discharged to distributor 361 and 362 from the discharge pipes 353 and 354, respectively.

The distributor 361 (362) includes an open static-pressure-type stand pipe 375 (376), which opens upward, extends vertically, and is adapted to establish a predetermined head through accumulation of liquid discharged from the discharge pipe 353 (354); a main header 377 (379), which serves as the first distribution section for distributing liquid in a direction perpendicular to the partition 22; and a plurality of arm tubes 378 (380), which are connected to the main header 377 (379) and serve as the second distribution section for distributing liquid having been distributed by the main header 377 (379), in the same direction as that of the partition 22. Accordingly, the liquid can be distributed uniformly over the entire fourth section 14.

The distribution ratio of liquid between the first chamber 14A and the second chamber 14B is established through adjustment of the amount of liquid discharged from the discharge pipes 353 and 354. To this end, holes formed in the discharge pipes 353 and 354 and in the arm tubes 378 and 380 assume different diameters according to the distribution ratio.

Next, a tenth embodiment of the present invention will be described.

FIG. 27 is a schematic view of a distributor in the tenth embodiment of the present invention.

In this case, a distributor 331 assumes a two-level structure and includes main headers 337 and 338, which serve as the first distribution section for distributing liquid in a direction perpendicular to the partition 22 (FIG. 26); and a plurality of arm tubes 339 and 340, which are connected to the main headers 337 and 338, respectively, and serve as the second distribution section for distributing liquid having been distributed by the main headers 337 and 338, in the same direction as that of the partition 22. Accordingly, the liquid can be distributed uniformly over the entire fourth section 14. (FIG. 21). Notably, the positions of the arm tubes 339 and 340 are established such that the arm tubes 340 are not disposed under unillustrated holes formed in the arm tubes 339. Reference numeral 225 denotes a stand pipe.

In this case, the distribution ratio is set to 2:8 to 5:5 according to the required purity of a product. A load factor within the range of operation is set to 1:20 as usual.

The diameter of unillustrated holes formed in the arm tubes 339 and 340 disposed on the side of the first chamber 14A and the diameter of unillustrated holes formed in the arm tubes 339 and 340 disposed on the side of the second chamber 14B are established according to the distribution ratio.

In the present embodiment, a single distributor 331 is disposed above the fourth section 14. However, as in the case of the ninth embodiment, the distributor 331 may be disposed above each of the first and second chambers 14A and 14B. In this case, the diameter of holes formed in the arm tubes 339 and 340 disposed above the first chamber 14A and the diameter of holes formed in the arm tubes 339 and 340 disposed above the second chamber 14B can be rendered different from each other. Also, the level of liquid contained in one of the two distributors 331 can be set somewhere between the main header 337 and the main header 338.

Next, an eleventh embodiment of the present invention will be described.

FIG. 28 is a schematic view of a distributor in the eleventh embodiment of the present invention.

In this case, a distributor 381 assumes a one-sided two-level structure; specifically, the distributor 381 assumes a single-level structure on the side of the first chamber 14A (FIG. 21) while assuming a two-level structure on the side of the second chamber 14B. The distributor 381 includes main headers 387-389, which serve as the first distribution section for distributing liquid in a direction perpendicular to the partition 22; and a plurality of arm tubes 391-393, which are connected to the main headers 387-389 and serve as the second distribution section for distributing liquid having been distributed by the main headers 387-389, in the same direction as that of the partition 22. Accordingly, the liquid can be distributed uniformly over the entire fourth section 14. The present embodiment is applied to the case where an established distribution ratio is significantly imbalanced. Notably, the positions of the arm tubes 392 and 393 are established such that the arm tubes 393 are not disposed under unillustrated holes formed in the arm tubes 392. Reference numeral 225 denotes a stand pipe.

The diameter of unillustrated holes formed in the arm tubes 391 and the diameter of unillustrated holes formed in the arm tubes 392 and 393 are established according to the distribution ratio.

In the above-described ninth through eleventh embodiments, liquid is fed to the liquid collection pipe 252 or 352 from two circumferential positions of the collector box 72. However, when the diameter of the column body 70 is small, liquid may be fed to the liquid collection pipe from a single circumferential position of the collector box 72.

Next, a twelfth embodiment of the present invention will be described.

FIG. 29 is a schematic view of essential portions of a coupling-type distillation column in the twelfth embodiment of the present invention.

In the drawing, liquid descending from the second section 12 (FIG. 21) is collected by a collector 54. The collector 54 includes a cylindrical column body 70; a plurality of collector laminas 71 disposed at predetermined pitches in parallel with one another; and a collector box 72 formed along the inner circumferential wall of the column body 70 and including an annular gutter.

Liquid descending from the second section 12 is transmitted to the collector box 72. Subsequently, the liquid in the collector box 72 is transmitted to the center of the column body 70 by a liquid correction pipe 395 and is then discharged from a nozzle 396.

Meanwhile, liquid descending from the enriching section AR1 of the first distillation section 25 (FIG. 1) must be brought into contact with vapor ascending in the exhaust section AR2. If the material liquid M is fed via the feed nozzle 41 as it is, liquid flows in a biased manner, causing insufficient contact between liquid and vapor in the enriching section AR1 and the exhaust section AR2.

Liquid descending from the exhaust section AR4 of the second distillation section 26 is brought into contact with vapor ascending in the enriching section AR5 of the third distillation section 27, and a portion of the liquid is withdrawn as a product. If in order to withdraw the product, an unillustrated liquid receiver is projected to a great extent into the second chamber 15B, the liquid receiver causes a biased flow of vapor, resulting in insufficient contact between liquid and vapor in the exhaust section AR4 and the enriching section AR5.

In order to cope with the above problem, a thirteenth embodiment of the present invention employs a lamina-type collector. The thirteenth embodiment will next be described. Structural features similar to those of the first embodiment are denoted by common reference numerals, and repeated description thereof is omitted.

FIG. 30 is a conceptual view of a coupling-type distillation column in the thirteenth embodiment of the present invention. FIG. 31 is a sectional view of essential portions of a collector in the thirteenth embodiment of the present invention. FIG. 32 is a plan view of the collector in the thirteenth embodiment of the present invention. FIG. 33 is a plan view of a collector box in the thirteenth embodiment of the present invention. FIG. 34 is a sectional view of the collector box in the thirteenth embodiment of the present invention. FIGS. 31 and 32 show only a collector 462, whereas FIGS. 33 and 34 show collectors 462 and 465.

In this case, the collector 462 includes a column body 70; a partition 23 for dividing a fifth section 15 in the column body 70 into a semispherical first chamber 15A and a semispherical second chamber 15B; a collector box 72 for forming a liquid collection gutter 491 along the inner wall of each of the column body 70 and the partition 23; a lamina support 492 extending on the collector box 72; and a plurality of collector laminas 493 and 494 disposed along the lamina support 492 at predetermined pitches and in parallel with one another. As shown in FIG. 32, the collector laminas 493 and 494 extend on an inner circumferential wall 72a of the collector box 72 between the column body side of the wall 72a and the partition side of the wall 72a and in a direction perpendicular to the partition 23.

Each of the collector laminas 493 and 494 includes a bent portion 473 located at an upper end thereof; an inclined portion 474 located at a central portion thereof; and a gutter portion 475 located at a lower end thereof. The bent portions 473 and the gutter portions 475 extend horizontally (in a direction perpendicular to paper of FIG. 31 and extending away from the back side of the paper). The central collector lamina 494 includes a single gutter portion 475, two inclined portions 474 and two bent portions 473. The two inclined portions 474 are inclined in such a manner as to extend away from the center of the first chamber 15A. The collector laminas 493 are disposed on the opposite sides of the collector lamina 494, for example, 4 pieces each, and inclined in such a manner as to extend away from the center of the first chamber 15A. The end of each bent portion 473 overlaps the inclined portion 474 of the adjacent collector lamina 493 such that descending liquid impinges against the collector laminas 493 and 494 without fail.

One end of each of the gutter portions 475 faces the column body side of the liquid collection gutter 491 while the other end of each of the gutter portions 475 faces the partition side of the liquid collection gutter 491. Thus, liquid collected in the gutter portions 475 is transmitted to the liquid collection gutter 491 from the column body 70 side or the partition 23 side of the gutter portions 475. At a portion of the liquid collection gutter 491 which is located the farthest from the partition 23, a feed nozzle 41 is connected to the column body 70, and a liquid draw nozzle 495 is connected to the collector box 72. The collector 465 assumes a structure similar to that of the collector 462. At a portion of the liquid collection gutter 491 which is located the farthest from the partition 23, a side cut nozzle 42 is connected to the column body 70, and a liquid draw nozzle 495 is connected to the collector box 72.

In this case, the column body 70, the partition 23, and the collectors 462 and 465 constitute a liquid collection unit.

Accordingly, liquid descending from the first chamber 14A of the fourth section 14 impinges against the collector laminas 493 and 494 of the collector 462, flows along the inclined portions 474, and is then received by the gutter portions 475. The received liquid flows horizontally in the gutter portions 475 and then reaches the liquid collection gutter 491. In the liquid collection gutter 491, the material liquid M fed from the feed nozzle 41 is mixed with the liquid therein. Subsequently, the liquid in the liquid collection gutter 491 is withdrawn through the liquid draw nozzle 495 and transmitted to a distributor 63. The distributor 63 feeds the liquid to a first chamber 16A of a sixth section 16. In this case, in the liquid collection gutter 491, the material liquid M fed from the feed nozzle 41 is mixed with the liquid collected by the collector 462. The resultant mixture is fed to the first chamber 16A by means of the distributor 63; thus, a biased flow of liquid does not occur.

Vapor ascending from the first chamber 16A passes through gaps between the collector laminas 493 and 494 of the collector 462 and ascends along the inclined portions 474 and away from the center of the first chamber 15A. At this time, since the vapor ascends smoothly along the inclined portions 474, a pressure loss caused by the collector 462 becomes almost negligibly small. Thus, a biased flow of vapor does not occur.

Since a biased flow of liquid and vapor does not occur, liquid and vapor can make sufficient contact with each other in the enriching section AR1 and the exhaust section AR2.

Likewise, liquid descending from the second chamber 14B of the fourth section 14 impinges against the collector laminas 493 and 494 of the collector 465, flows along the inclined portions 474, and is then received by the gutter portions 475. The received liquid flows horizontally in the gutter portions 475 and then reaches the liquid collection gutter 491. A portion of the liquid in the liquid collection gutter 491 is withdrawn as a product from the side cut nozzle 42. Subsequently, the liquid in the liquid collection gutter 491 is withdrawn through the liquid draw nozzle 495 and transmitted to a distributor 66. The distributor 66 feeds the liquid to a second chamber 16B of a sixth section 16. In this case, since there is no need for projecting the collector box 72 to a great extent into the second chamber 15B in order to withdraw the product, the collector box 72 does not cause a biased flow of vapor.

Vapor ascending from the second chamber 16B passes through gaps between the collector laminas 493 and 494 of the collector 465 and ascends along the inclined portions 474 and away from the center of the second chamber 15B. At this time, since the vapor ascends smoothly along the inclined portions 474, a pressure loss caused by the collector 465 becomes almost negligibly small. Thus, a biased flow of vapor does not occur.

Since a biased flow of vapor does not occur, liquid and vapor can make sufficient contact with each other in the exhaust section AR4 and the enriching section AR5.

Next, a fourteenth embodiment of the present invention will be described. Structural features similar to those of the thirteenth embodiment are denoted by common reference numerals, and repeated description thereof is omitted.

FIG. 35 is a view showing the state of mounting of a collector in the fourteenth embodiment of the present invention. FIG. 36 is a sectional view of essential portions of a coupling-type distillation column in the fourteenth embodiment of the present invention. FIG. 37 is a plan view of the collector in the fourteenth embodiment of the present invention. FIG. 38 is a sectional view of the collector in the fourteenth embodiment of the present invention. FIG. 39 is a view showing a gasket in the fourteenth embodiment of the present invention.

In this case, the first chamber 15A of the fifth section 15 (FIG. 30) includes a lamina-type collector 562 disposed just above the feed nozzle 41 and a tubular distributor 563 disposed just under the feed nozzle 41. Liquid collected by the collector 562, together with the material liquid M fed through the feed nozzle 41, is fed to the first chamber 16A of the sixth section 16 by means of the distributor 563. The distributor 563 includes an open static-pressure-type liquid collection pipe 563a; a main header 563b connected to the liquid collection pipe 563a and extending in a direction perpendicular to the partition 23; and a plurality of arm channels 563c connected to the main header 563b and extending in parallel with the partition 23 (in a direction perpendicular to paper of FIG. 36 and extending away from the back side of the paper). A plurality of unillustrated holes are formed in the arm channels 563c.

The second chamber 15B of the fifth section 15 includes a lamina-type collector 565 disposed just above the side cut nozzle 42 and a tubular distributor 566 disposed just under the side cut nozzle 42. Liquid collected by the collector 565 is discharged as a product from the side cut nozzle 42 and fed to the second chamber 16B of the sixth section 16 by means of the distributor 566. The distributor 566 includes an open static-pressure-type liquid collection pipe 566a; a main header 566b connected to the liquid collection pipe 566a and extending in a direction perpendicular to the partition 23; and a plurality of arm channels 566c connected to the main header 566b and extending in parallel with the partition 23 (in a direction perpendicular to paper of FIG. 36 and extending away from the back side of the paper). A plurality of unillustrated holes are formed in the arm channels 566c.

As shown in FIG. 35, the collectors 562 and 565 include a column body 70; a partition 23 for dividing the fifth section 15 in the column body 70 into a semispherical first chamber 15A and a semispherical second chamber 15B; a collector box 72 for forming a liquid collection gutter 591 along the inner wall of each of the column body 70 and the partition 23; a lamina support 592 extending on the collector box 72; and a plurality of collector laminas 593 disposed along the lamina support 592 at predetermined pitches and in parallel with one another. As shown in FIG. 37, the collector laminas 593 extend on an inner circumferential wall 72a of the collector box 72 between the column body side of the wall 72a and the partition side of the wall 72a and in a direction perpendicular to the partition 23.

Each of the collector laminas 593 includes a bent portion 573 located at an upper end thereof; an inclined portion 574 located at a central portion thereof; and a gutter portion 575 located at a lower end thereof. The bent portions 573 and the gutter portions 575 extend horizontally (in a direction perpendicular to paper of FIG. 38 and extending away from the back side of the paper). Every two adjacent collector laminas 593 are fixed to the corresponding upright portions 592a of the laminar support 592.

The end of each bent portion 573 overlaps the inclined portion 574 of the adjacent collector lamina 593 such that descending liquid impinges against the collector laminas 593 without fail.

One end of each of the gutter portions 575 faces the column-body-side portion 591a of the liquid collection gutter 591 while the other end of each of the gutter portions 575 faces the partition-side portion 591b of the liquid collection gutter 591. Thus, liquid collected in the gutter portions 575 is transmitted to the liquid collection gutter 591 from the column body 70 side or the partition 23 side of the gutter portions 575. At a portion of the liquid collection gutter 591 which is located the farthest from the partition 23, the feed nozzle 41 is connected to the column body 70, and a liquid draw nozzle 595 is connected to the collector box 72. The collector 565 assumes a structure similar to that of the collector 562. At a portion of the liquid collection gutter 591 which is located the farthest from the partition 23, the side cut nozzle 42 is connected to the column body 70, and a liquid draw nozzle 595 is connected to the collector box 72.

In this case, the column body 70, the partition 23, and the collectors 562 and 565 constitute a liquid collection unit.

Accordingly, liquid descending from the first chamber 14A of the fourth section 14 impinges against the collector laminas 593 of the collector 562, flows along the inclined portions 574 and is then received by the gutter portions 575. The received liquid flows horizontally in the gutter portions 575 and then reaches the liquid collection gutter 591. In the liquid collection gutter 591, the material liquid M fed from the feed nozzle 41 is mixed with the liquid therein. Subsequently, the liquid in the liquid collection gutter 591 is withdrawn through the liquid draw nozzle 595 and transmitted to the distributor 563. The distributor 563 feeds the liquid to the first chamber 16A of the sixth section 16. In this case, in the liquid collection gutter 591, the material liquid M fed from the feed nozzle 41 is mixed with the liquid collected by the collector 562. The resultant mixture is fed to the first chamber 16A by means of the distributor 563; thus, a biased flow of liquid does not occur.

Vapor ascending from the first chamber 16A passes through gaps between the collector laminas 593 of the collector 562 and ascends along the inclined portions 574 and away from the center of the column body 70. At this time, since the vapor ascends smoothly along the inclined portions 574, a pressure loss caused by the collector 562 becomes almost negligibly small. Thus, a biased flow of vapor does not occur.

Since a biased flow of liquid and vapor does not occur, liquid and vapor can make sufficient contact with each other in the enriching section AR1 and the exhaust section AR2.

Likewise, liquid descending from the second chamber 14B of the fourth section 14 impinges against the collector laminas 593 of the collector 565, flows along the inclined portions 574, and is then received by the gutter portions 575. The received liquid flows horizontally in the gutter portions 575 and then reaches the liquid collection gutter 591. A portion of the liquid in the liquid collection gutter 591 is withdrawn as a product from the side cut nozzle 42. Subsequently, the liquid in the liquid collection gutter 591 is withdrawn through the liquid draw nozzle 595 and transmitted to the distributor 566. The distributor 566 feeds the liquid to the second chamber 16B of the sixth section 16. In this case, since there is no need for projecting the collector box 72 to a great extent into the second chamber 15B in order to withdraw the product, the collector box 72 does not cause a biased flow of vapor.

Vapor ascending from the second chamber 16B passes through gaps between the collector laminas 593 of the collector 565 and ascends along the inclined portions 574. At this time, since the vapor ascends smoothly along the inclined portions 574, a pressure loss caused by the collector 565 becomes almost negligibly small. Thus, a biased flow of vapor does not occur.

Since a biased flow of vapor does not occur, liquid and vapor can make sufficient contact with each other in the exhaust section AR4 and the enriching section AR5.

Meanwhile, the column body 70 constitutes the fifth section 15. For connection between the column body 70 and the fourth section (hereinafter called an "upper column body") 14, an annular flange 596 is formed at the upper end of the column body 70, and an unillustrated annular flange is formed at the lower end of the upper column body, both in such a manner as to project radially outward. An annular stepped portion 597 is formed on the upper surface of the flange 596 along an inner circumferential edge of the flange 596. Also, an engagement portion 23a is formed In the vicinity of the upper end of the partition 23 in such a manner as to radially project into the first and second chambers 14A and 14B.

An engagement flange 72b is formed along the circumferential edge of the upper end of the collector box 72 in such a manner as to correspond to the stepped portion 597 and the engagement portion 23a.

The collectors 562 and 565 are preassembled into a single unit. The thus-assembled collectors 562 and 565 are installed in place such that the engagement flange 72b rests on the stepped portion 597 and the engagement portion 23a; i.e., the upper end of the collector box 72 rests on the upper end of the column body 70 and on the upper end of the partition 23. While a gasket 598 is placed on the flange 596 and the partition 23, the flange 596 and the flange of the upper column body are connected by means of bolts or the like. In this manner, the collectors 562 and 565 can be easily mounted on the column body 70. Assuming a shape corresponding to the column body 70 and the partition 23, the gasket 598 seals the upper end of the collector box 72 and is composed of a portion 598a corresponding to the column body 70 and extending circumferentially and a portion 598b corresponding to the partition 23 and extending diametrally.

In this case, since there is no need for assembling the collectors 562 and 565 in the coupling-type distillation column 10, assembling work can be simplified.

The present invention is not limited to the above-described embodiments. Numerous modifications and variations of the present invention are possible in light of the spirit of the present invention, and they are not excluded from the scope of the present invention.

INDUSTRIAL APPLICABILITY

The present invention can be applied to a distillation apparatus for obtaining products through distillation-effected separation of a plurality of components contained in a material liquid.

**Claims**

1. A distillation apparatus characterized by comprising:

   (a) a column body;
   (b) a partition for dividing the interior of said column body into a first chamber and a second chamber, which are adjacent to each other;
   (c) a feed nozzle for feeding into said column body a material liquid containing at least first to third components;
   (d) a first distillation section comprising an enriching section located at an upper portion thereof and an exhaust section located at a lower portion thereof;
   (e) a second distillation section disposed such that at least a portion thereof is adjacent to the top of said column body, and comprising an enriching section located at an upper portion thereof and an exhaust section located at a lower portion thereof;
   (f) a third distillation section disposed such that at least a portion thereof is adjacent to the bottom of said column body, and comprising an enriching section located at an upper portion thereof and an exhaust section located at a lower portion thereof;
   (g) first discharge means for discharging the first component;
   (h) second discharge means for discharging the second component; and
   (i) third discharge means for discharging the third component, wherein
   (j) said partition is biased such that the cross-sectional area of the first chamber differs from that of the second chamber.

2. A distillation apparatus as described in claim 1, wherein said first distillation section is disposed at the center of said column body.

3. A distillation apparatus as described in claim 1, wherein said feed nozzle is adapted to feed the material liquid into the first distillation section.

4. A distillation apparatus as described in claim 1, wherein a packing is disposed in at least the enriching section and the exhaust section of said first distillation section such that the packing disposed in the enriching section and the packing disposed in the exhaust section are independent of each other.

5. A distillation apparatus as described in claim 1, wherein:

(a) said second distillation section comprises the enriching section connected to and formed above an upper end of said first distillation section; and the exhaust section formed below the upper end and located adjacent to the enriching section of said first distillation section while being separated by said partition; and
(b) said third distillation section comprises the enriching section connected to and formed above a lower end of said first distillation section, and located adjacent to the exhaust section of said first distillation section while being separated by said partition; and the exhaust section formed below the lower end.

6. A distillation apparatus as described in claim 3, wherein said feed nozzle is disposed between the enriching section and the exhaust section in said first distillation section.

7. A distillation apparatus as described in claim 4, wherein the packings are of the same kind.

8. A distillation apparatus as described in claim 4, wherein the packings are of different kinds.

9. A distillation apparatus characterized by comprising:

(a) a column body;
(b) a partition for dividing the interior of said column body into a first chamber and a second chamber, which are adjacent to each other;
(c) a feed nozzle for feeding into said column body a material liquid containing at least first to third components;
(d) a first distillation section comprising an enriching section located at an upper portion thereof and an exhaust section located at a lower portion thereof;
(e) a second distillation section disposed such that at least a portion thereof is adjacent to the top of said column body, and comprising an enriching section located at an upper portion thereof and an exhaust section located at a lower portion thereof;
(f) a third distillation section disposed such that at least a portion thereof is adjacent to the bottom of said column body, and comprising an enriching section located at an upper portion thereof and an exhaust section located at a lower portion thereof;
(g) first discharge means for discharging the first component;
(h) second discharge means for discharging the second component; and
(i) third discharge means for discharging the third component, wherein
(j) liquid descending from the enriching section of said second distillation section is distributed between the enriching section of said first distillation section and the exhaust section of said second distillation section at a distribution ratio which is predetermined on the basis of distillation conditions; and
(k) a pressure loss arising in said first distillation section is equalized with sum of a pressure loss arising in the exhaust section of said second distillation section and a pressure loss arising in the enriching section of said third distillation section.

10. A distillation apparatus as described in claim 9, wherein an F factor in at least said first distillation section, the exhaust section of said second distillation section, and the enriching section of said third distillation section is set to a value that enables obtainment of a pressure loss almost free from influence of the amount of descending liquid.

11. A distillation apparatus as described in claim 9, wherein an F factor in at least said first distillation section, the exhaust section of said second distillation section, and the enriching section of said third distillation section is 1.0-1.5.

12. A distillation apparatus as described in claim 9, wherein the pressure losses are calculated on the basis of the number of theoretical stages, the number of thoretical stages per meter, and a pressure loss per unit height.

**13.** A distillation apparatus as described in claim 9, wherein the ratio between the cross-sectional area of said first distillation section and the cross-sectional area of the exhaust section of said second distillation section and the ratio between the cross-sectional area of said first distillation section and the cross-sectional area of the enriching section of said third distillation section are established according to the amount of ascending vapor.

**14.** A distillation apparatus characterized by comprising:

(a) a column body;
(b) a partition for dividing the interior of said column body into a plurality of chambers, which are adjacent to one another;
(c) a collector disposed within said column body and adapted to collect liquid descending from above; and
(d) a channel-type distributor for distributing liquid collected by said collector, among the chambers in different portions.

**15.** A distillation apparatus characterized by comprising:

(a) a column body;
(b) a partition for dividing the interior of said column body into a plurality of chambers, which are adjacent to one another;
(c) a collector disposed within said column body and adapted to collect liquid descending from above; and
(d) an open static-pressure-type tubular distributor for distributing liquid collected by said collector, among the chambers in different portions.

**16.** A distillation apparatus characterized by comprising:

(a) a column body;
(b) a partition for dividing the interior of said column body into a plurality of chambers, which are adjacent to one another;
(c) a collector disposed within said column body and adapted to collect liquid descending from above; and
(d) an open static-pressure-type tubular distributor for distributing liquid collected by said collector to a single chamber located therebelow, wherein
(e) said distributor comprises an open static-pressure-type stand pipe for accumulating liquid discharged from said collector so as to establish a predetermined head; a first distribution section for distributing liquid in a direction perpendicular to said partition; and a second distribution section disposed in connection with the first distribution section and adapted to distribute liquid having been distributed by the first distribution section, in the same direction as that of said partition; and
(f) the first distribution section is connected to a lower end of the stand pipe at a position biased toward said partition from the center of the chamber.

**17.** A distillation apparatus characterized by comprising:

(a) a column body;
(b) a partition for dividing the interior of said column body into a plurality of chambers, which are adjacent to one another;
(c) a collector box for forming a liquid collection gutter along an inner wall of each of said column body and said partition; and
(d) a plurality of collector laminas disposed on said collector box at predetermined pitches in parallel with one another, wherein
(e) each of said collector laminas comprises an inclined portion and a gutter portion, and one end of the gutter portion faces the column body side of the liquid collection gutter while the other end of the gutter portion faces the partition side of the liquid collection gutter.

**18.** A distillation apparatus characterized by comprising:

(a) a column body;
(b) a partition for dividing the interior of said column body into a plurality of chambers, which are adjacent to one another;
(c) a collector box for forming a liquid collection gutter along an inner wall of each of said column body and said partition; and

(d) a plurality of collector laminas disposed on said collector box at predetermined pitches in parallel with one another, wherein

(e) said collector box and said collector laminas are assembled in advance, and said collector box is engaged with said column body and said partition.

19. A distillation apparatus as described in claim 18, wherein:

(a) an upper end of said collector box is engaged with said column body and said partition; and

(b) a flange of said column body and said partition are sealed against each other by means of a gasket assuming a form corresponding to said column body and said partition.

20. A distillation method characterized by comprising the steps of:

(a) feeding a material liquid containing at least first to third components into a column body which comprises a first distillation section comprising an enriching section located at an upper portion thereof and an exhaust section located at a lower portion thereof; a second distillation section disposed such that at least a portion thereof is adjacent to the top of the column body, and comprising an enriching section located at an upper portion thereof and an exhaust section located at a lower portion thereof; a third distillation section disposed such that at least a portion thereof is adjacent to the bottom of the column body, and comprising an enriching section located at an upper portion thereof and an exhaust section located at a lower portion thereof; and a partition which is disposed in a biased manner so as to render the cross-sectional area of a first chamber different from that of a second chamber;

(b) condensing vapor containing a predetermined component, by means of a condenser connected to an upper end of the second distillation section;

(c) evaporating liquid containing a predetermined component, by means of an evaporator connected to a lower end of the third distillation section; and

(d) obtaining liquid rich in the first component at the upper end of the second distillation section; liquid rich in the third component at the lower end of the third distillation section; and liquid rich in the second component at a section where the partition is disposed.

21. A distillation method as described in claim 19, wherein the first component is lower in boiling point than the second component, which in turn is lower in boiling point than the third component.

# FIG. 1

# FIG. 2

# FIG. 3

# FIG. 4

# FIG. 5

# FIG. 6

# FIG. 7

# FIG. 8

# FIG. 9

# FIG. 10

(m³/m² hr)

| | | DESCENDING-LIQUID FLOW RATE | | | | | |
|---|---|---|---|---|---|---|---|
| | | 5 | 10 | 15 | 20 | 25 | 30 |
| F FACTOR | 0 . 5 | 0.144 | 0.144 | 0.144 | 0.144 | 0.144 | 0.144 |
| | 1 . 0 | 0.502 | 0.502 | 0.502 | 0.502 | 0.505 | 0.518 |
| | 1 . 5 | 1.041 | 1.041 | 1.135 | 1.284 | 1.504 | 1.831 |
| | 2 . 0 | 1.743 | 1.857 | 2.454 | 4.119 | 6.051 | 8.926 |
| | 2 . 5 | 2.632 | 3.233 | 5.233 | 10.919 | 28.306 | 53.064 |

# FIG. 11

| SECTION / CHAMBER | FILLER | DESCENDING-LIQUID FLOW RATE | ASCENDING-VAPOR FLOW RATE | F FACTOR |
|---|---|---|---|---|
| 12 | A | 7500 | 7600 | 1.18 |
| 14A | A | 4500 | 7600 | 1.28 |
| 16A | A | 9200 | 7700 | 1.2 |
| 14B | A | 10500 | 7500 | 1.17 |
| 16B | A | 6100 | 7500 | 1.17 |
| 18 | B | 7600 | 7600 | 1.18 |

# FIG. 12

| FILLER | f i | ΔPi | NTSMi |
|--------|-----|-----|-------|
| A | 1.17~1.28 | 0.5~0.6 | 5.5~5.6 |
| B | 1.18 | 0.5 | 3.6 |

# FIG. 13

| SECTION/ CHAMBER | FILLER | DESCENDING-LIQUID FLOW RATE | ASCENDING-VAPOR FLOW RATE | F FACTOR |
|------------------|--------|------------------------------|----------------------------|----------|
| 12 | C | 4400 | 4600 | 2.87 |
| 14A | D | 3400 | 4700 | 2.25 |
| 16A | D | 10600 | 7800 | 3.39 |
| 14B | D | 7800 | 6900 | 3.27 |
| 16B | D | 4700 | 7100 | 3.03 |
| 18 | C | 6700 | 6700 | 2.73 |

# FIG. 14

| FILLER | f i | ΔPi | NTSMi |
|--------|-----|-----|-------|
| C | 2.73 | 4.5 | 2.2 |
| C | 2.87 | 4.5 | 2.2 |
| D | 2.25 | 0.8 | 2.2 |
| D | 2.73 | 0.8 | 2.2 |
| D | 3.03 | 3.0 | 2.0 |
| D | 3.27 | 4.0 | 2.0 |
| D | 3.39 | 4.5 | 2.0 |

# FIG. 15

| SECTION/ CHAMBER | FILLER | DESCENDING-LIQUID FLOW RATE | ASCENDING-VAPOR FLOW RATE | F FACTOR |
|---|---|---|---|---|
| 12 | C | 4000 | 4300 | 2.7 |
| 14A | D | 4100 | 4600 | 2.2 |
| 16A | D | 10000 | 7000 | 3.2 |
| 14B | A | 8000 | 7000 | 1.1 |
| 16B | A | 6000 | 7000 | 1.1 |
| 18 | B | 7500 | 7500 | 1.18 |

# FIG. 16

| FILLER | fi | ΔPi | NTSMi |
|---|---|---|---|
| C | 2.7 | 2 | 2.6 |
| D | 2.2~3.2 | 0.7~3.5 | 2.2~2.0 |
| A | 1.1 | 0.45 | 6 |
| B | 1.18 | 0.5 | 3.6 |

# FIG. 17

# FIG. 18

# FIG. 19

# FIG. 20

# FIG. 21

# FIG. 22

# FIG. 23

# FIG. 24

278

255

282    277    283

# FIG. 25

226

225

## FIG. 26

## FIG. 27

# FIG. 28

# FIG. 29

# FIG. 30

# FIG. 31

# FIG. 32

491  72  72a  70  462

493 493 493 72a 493 493
493 494 23 493 493

# FIG. 33

15  23  70

15A  15B

495  495  72

491  491

# FIG. 34

# FIG. 35

# FIG. 36

# FIG. 37

# FIG. 38

# FIG. 39

598a

598

598b

# INTERNATIONAL SEARCH REPORT

| | |
|---|---|
| | International application No. |
| | PCT/JP99/02286 |

**A. CLASSIFICATION OF SUBJECT MATTER**

Int.Cl$^6$ B01D3/32

According to International Patent Classification (IPC) or to both national classification and IPC

**B. FIELDS SEARCHED**

Minimum documentation searched (classification system followed by classification symbols)

Int.Cl$^6$ B01D3/00-3/42

Documentation searched other than minimum documentation to the extent that such documents are included in the fields searched

| Jitsuyo Shinan Koho | 1940-1998 | Toroku Jitsuyo Shinan Koho | 1994-1998 |
|---|---|---|---|
| Kokai Jitsuyo Shinan Koho | 1971-1998 | Jitsuyo Shinan Keisai Koho | 1996-1998 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 9-299701, A (Kyowa Yuka Co., Ltd., Sumitomo Heavy Industries,Ltd.), | 9-19 |
| A | 25 November, 1997 (25. 11. 97),<br>Full text ; particularly Figs. 1, 21<br>(Family: none) | 1-8, 20-21 |
| Y | JP, 8-38802, A (BASF AG.), | 9-19 |
| A | 13 February, 1996 (13. 02. 96),<br>Claims ; Figs. 2, 3<br>& EP, 684060, A2 & DE, 4418488, A1<br>& US, 5897748, A | 1-8, 20-21 |
| A | US, 4,230,533, A (Phillips Petroleum Company),<br>28 October, 1980 (28. 10. 80) (Family: none) | 1-21 |
| A | JP, 7-80201, A (BASF AG.),<br>28 March, 1995 (28. 03. 95)<br>& EP, 640367, A1 & DE, 4328424, A1<br>& US, 5785819, A & ES, 2119936, T3 | 1-21 |

| | |
|---|---|
| [X] Further documents are listed in the continuation of Box C. | [ ] See patent family annex. |

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier document but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | |
| "O" | document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" document member of the same patent family |

| Date of the actual completion of the international search | Date of mailing of the international search report |
|---|---|
| 3 August, 1999 (03. 08. 99) | 17 August, 1999 (17. 08. 99) |

| Name and mailing address of the ISA/<br>Japanese Patent Office | Authorized officer |
|---|---|
| Facsimile No. | Telephone No. |

Form PCT/ISA/210 (second sheet) (July 1992)

**INTERNATIONAL SEARCH REPORT**

| International application No. |
| --- |
| PCT/JP99/02286 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | JP, 59-142801, A (BASF AG.), 16 August, 1984 (16. 08. 84), Particularly Fig. 1 & DE, 3302525, A & EP, 122367, A | 1-21 |

Form PCT/ISA/210 (continuation of second sheet) (July 1992)